# EUROPEAN PATENT SPECIFICATION

(11) **EP 4 657 363 B1**
(45) Date of publication and mention of the grant of the patent: **19.08.2026**
(21) Application number: 25166210.2
(22) Date of filing: 26.03.2025
(51) Int. Cl.: G06T 3/4046, G06T 3/4053

(54) **METHOD AND SYSTEM FOR MULTIMODAL IMAGE SUPER-RESOLUTION USING A DEEP CONVOLUTIONAL TRANSFORM LEARNING**
VERFAHREN UND SYSTEM ZUR MULTIMODALEN BILDSUPERAUFLÖSUNG UNTER VERWENDUNG VON TIEFEN FALTUNGSTRANSFORMATIONSLERNEN
PROCÉDÉ ET SYSTÈME DE SUPER-RÉSOLUTION D'IMAGE MULTIMODALE UTILISANT UN APPRENTISSAGE PAR TRANSFORMÉE À CONVOLUTION PROFONDE

(30) Priority: 31.05.2024 IN 202421042574
(43) Date of publication of application: 03.12.2025
(73) Proprietor: Tata Consultancy Services Limited, Mumbai, Maharashtra 400 021 (IN)
(72) Inventor: KUMAR, Kriti, 560056 Bangalore, Karnataka (IN); KUMAR, Achanna Anil, 560056 Bangalore, Karnataka (IN); CHANDRA, Mariswamy Girish, 560056 Bangalore, Karnataka (IN); MAJUMDAR, Angshul, 110020 New Delhi, Delhi (IN)
(74) Representative: Goddar, Heinz J.

(56) References cited:
- KANTH R KRISHNA ET AL: "Multi-modal Image Super-resolution with Joint Coupled Deep Transform Learning", 2022 30TH EUROPEAN SIGNAL PROCESSING CONFERENCE (EUSIPCO), EUSIPCO, 29 August 2022 (2022-08-29), pages 474 - 478, XP034208792
- YUAN YUAN ET AL: "Hyperspectral Image Superresolution by Transfer Learning", IEEE JOURNAL OF SELECTED TOPICS IN APPLIED EARTH OBSERVATIONS AND REMOTE SENSING, IEEE, USA, vol. 10, no. 5, 1 May 2017 (2017-05-01), pages 1963 - 1974, XP011645526, ISSN: 1939-1404, [retrieved on 20170410], DOI: 10.1109/JSTARS.2017.2655112
- JYOTI MAGGU ET AL: "Deep Convolutional Transform Learning -- Extended version", ARXIV.ORG, CORNELL UNIVERSITY LIBRARY, 201 OLIN LIBRARY CORNELL UNIVERSITY ITHACA, NY 14853, 2 October 2020 (2020-10-02), XP081776778

## Description

### TECHNICAL FIELD

The disclosure herein generally relates to the field of multimodal imaging and more particularly, to a method and system for multimodal image super-resolution using a deep convolutional transform learning (DCTL).

### BACKGROUND

In multi-modal imaging systems, scenes of interest are often captured by diverse imaging modalities, each at different resolution, to manage cost, bandwidth, and complexity. One such application using multi-modal imaging systems is remote sensing for earth observation. Real-world situations often involve processing data from diverse imaging modalities like Multispectral (MS), Near Infrared (NIR), and red, green, and blue (RGB), each capturing different aspects of the same scene. These diverse imaging modalities often vary in spatial and spectral resolution based on hardware and power requirements and that may impact downstream tasks like classification and change detection. Hence, Multi-modal Image Super-Resolution (MISR) techniques are required to improve the spatial and spectral resolution of low resolution (LR) images of a target modality, by taking help from High Resolution (HR) guidance modality that shares common features like textures, edges, and other structures. Despite the availability of the various MISR techniques, fusing images from diverse imaging modalities is not trivial as the correlation among images varies significantly for each multi-modal pair, making it an ill-posed problem.

The existing approaches for the MISR techniques can be broadly classified into (i) filtering-based techniques, and (ii) learning-based techniques. The filtering-based techniques utilize joint image filtering approaches such as guided image filtering, joint bilateral filtering, and joint image restoration. The filtering-based techniques focus on constructing joint filters by considering specific features like edges and textures from a guidance image. On the other hand, the learning-based techniques leverage deep learning and sparse representation learning based on dictionaries and transforms to model the complex dependencies between the diverse imaging modalities and extract meaningful information for guided multimodal super-resolution.

The learning-based techniques employing deep learning offer superior performance compared to the other MISR techniques. However, the learning-based techniques usually require abundant training data and substantial computational resources to achieve satisfactory reconstruction, making them prone to overfitting in scenarios with limited training data. Also, the learning-based techniques lack interpretability and cannot ensure measurement consistency between inputs and outputs during testing. Whereas sparse representation learning-based techniques do not suffer from these drawbacks. The sparse representation learning based techniques offer improved performance compared to deep learning techniques, especially with limited training data, which is usually the case in most practical application scenarios.

Among the sparse representation learning-based techniques, while Dictionary Learning (DL) focuses on data synthesis, Transform Learning (TL) is more popular for data analysis. However, both these techniques have been explored for MISR tasks, with the TL-based methods offering enhanced accuracy with reduced complexity over the DL variants. Convolutional DL (CDL) based approaches employing shift invariant dictionaries (filters) have also been applied for MISR and are shown to provide improved image reconstruction over the standard DL variants. The existing CDL-based approaches require learning many parameters (6 convolutional dictionaries and 3 coefficients). Moreover, it is computationally intensive, making it unsuitable for real-life applications with limited data. Also, traditional MISR techniques using Convolutional Neural Networks (CNNs) typically employ an encoder-decoder architecture, which involves learning lot of parameters and hence they are prone to overfit in data limited scenarios.
The following research papers represent related background art:
Kanth R. Krishna, et. al.: "Multi-modal Image Super-resolution with Joint Coupled Deep Transform Learning", 30th European Signal Processing Conference, 2022;
Yuan Yuan, et. al.: "Hyperspectral Image Superresolution by Transfer Learning", IEEE Journal of Selected Topics in Applied Earth Observation and Remote Sensing", IEEE, USA, vol. 10, no. 5;
Jyoti Maggu, et. al. "Deep Convolutional Transform Learning - Extended version", published 2.10.2020 at www.arxiv.org.

### SUMMARY

Embodiments of the present disclosure present technological improvements as solutions to one or more of the above-mentioned technical problems recognized by the inventors in conventional systems. For example, in one embodiment, a method for multimodal image super-resolution using a deep convolutional transform learning (DCTL) is provided. The method includes receiving a plurality of input images comprising (i) a plurality of low resolution (LR) images of a target modality, (ii) a plurality of high resolution (HR) images of a guidance modality, and (iii) a plurality of HR images of the target modality. Further the method includes preprocessing the plurality of input images, to generate a plurality of LR image patches of the target modality, a plurality of HR image patches of the guidance modality, and a plurality of HR image patches of the target modality. Further the method includes training a deep convolutional transform learning (DCTL) model, to learn a cross-modal relationship between the target modality and the guidance modality, using (i) the plurality LR image patches of the target modality, (ii) the plurality HR image patches of the guidance modality, and (iii) the plurality HR image patches of the target modality, to generate a trained DCTL model, wherein training the DCTL model comprises: initializing a N-layer deep convolutional transform corresponding to the plurality of LR image patches of the target modality, the N-layer deep convolutional transform corresponding to the plurality of HR image patches of the guidance modality, and a non-convolutional fusing transform; initializing a plurality of target features corresponding to the plurality of LR image patches of the target modality, and a plurality of guidance features corresponding to the plurality of HR image patches of the guidance modality with a null value; learning an updated N-layer deep convolutional transform corresponding to the plurality of LR image patches of the target modality, an updated N-layer deep convolutional transform corresponding to the plurality of HR image patches of the guidance modality, an updated non-convolutional fusing transform, an updated plurality of target features, and an updated plurality of guidance features, using a joint learning formulation for a Multi-modal Image Super-Resolution (MISR), wherein the joint learning formulation comprises updating the plurality of target features of the N-layer deep convolutional transform corresponding to the plurality of LR image patches of the target modality, the plurality of guidance features of the N-layer deep convolutional transform corresponding to the plurality of HR image patches of the guidance modality, the N-layer deep convolutional transform corresponding to the plurality of LR image patches of the target modality, the N-layer deep convolutional transform corresponding to the plurality of HR image patches of the guidance modality, and the non-convolutional fusing transform; and iteratively updating the N-layer deep convolutional transform corresponding to the plurality of LR image patches of the target modality, the N-layer deep convolutional transform corresponding to the plurality of HR image patches of the guidance modality, the non-convolutional fusing transform, the plurality of target features, and the plurality of guidance features, until convergence of an objective function of the joint learning formulation is achieved, to generate the trained DCTL model, wherein the convergence of the objective function is determined by identifying if difference in a value of the objective function of a current iteration and a previous iteration is less than an empirically determined threshold value.

In another aspect, a system for multimodal image super-resolution using a deep convolutional transform learning (DCTL) is provided is provided. The system comprising: a memory storing instructions; one or more communication interfaces; and one or more hardware processors coupled to the memory via the one or more communication interfaces, wherein the one or more hardware processors are configured by the instructions to: receive a plurality of input images comprising (i) a plurality of low resolution (LR) images of a target modality, (ii) a plurality of high resolution (HR) images of a guidance modality, and (iii) a plurality of HR images of the target modality; preprocess the plurality of input images, to generate a plurality of LR image patches of the target modality, a plurality of HR image patches of the guidance modality, and (iii) a plurality of HR image patches of the target modality; and train a deep convolutional transform learning (DCTL) model, to learn a cross-modal relationship between the target modality and the guidance modality, using (i) the plurality LR image patches of the target modality, (ii) the plurality HR image patches of the guidance modality, and (iii) the plurality HR image patches of the target modality, to generate a trained DCTL model, wherein training the DCTL comprises: initialize a N-layer deep convolutional transform corresponding to the plurality of LR image patches of the target modality, the N-layer deep convolutional transform corresponding to the plurality of HR image patches of the guidance modality, and a non-convolutional fusing transform; initialize a plurality of target features corresponding to the plurality of LR image patches of the target modality, and a plurality of guidance features corresponding to the plurality of HR image patches of the guidance modality with a null value; learn an updated N-layer deep convolutional transform corresponding to the plurality of LR image patches of the target modality, an updated N-layer deep convolutional transform corresponding to the plurality of HR image patches of the guidance modality, an updated non-convolutional fusing transform, an updated plurality of target features, and an updated plurality of guidance features, using a joint learning formulation for a Multi-modal Image Super-Resolution (MISR), wherein the joint learning formulation comprises updating the plurality of target features of the N-layer deep convolutional transform corresponding to the plurality of LR image patches of the target modality, the plurality of guidance features of the N-layer deep convolutional transform corresponding to the plurality of HR image patches of the guidance modality, the N-layer deep convolutional transform corresponding to the plurality of LR image patches of the target modality, the N-layer deep convolutional transform corresponding to the plurality of HR image patches of the guidance modality, and the non-convolutional fusing transform; and iteratively update the N-layer deep convolutional transform corresponding to the plurality of LR image patches of the target modality, the N-layer deep convolutional transform corresponding to the plurality of HR image patches of the guidance modality, the non-convolutional fusing transform, the plurality of target features, and the plurality of guidance features, until convergence of an objective function of the joint learning formulation is achieved, to generate the trained DCTL model, wherein the convergence of the objective function is determined by identifying if difference in a value of the objective function of a current iteration and a previous iteration is less than an empirically determined threshold value.

In yet another aspect, there are provided one or more non-transitory machine-readable information storage mediums comprising one or more instructions which when executed by one or more hardware processors cause a method for multimodal image super-resolution using a deep convolutional transform learning (DCTL) is provided is provided. The method includes receiving a plurality of input images comprising (i) a plurality of low resolution (LR) images of a target modality, (ii) a plurality of high resolution (HR) images of a guidance modality, and (iii) a plurality of HR images of the target modality. Further the method includes preprocessing the plurality of input images, to generate a plurality of LR image patches of the target modality, a plurality of HR image patches of the guidance modality, and a plurality of HR image patches of the target modality. Further the method includes training a deep convolutional transform learning (DCTL) model, to learn a cross-modal relationship between the target modality and the guidance modality, using (i) the plurality LR image patches of the target modality, (ii) the plurality HR image patches of the guidance modality, and (iii) the plurality HR image patches of the target modality, to generate a trained DCTL model, wherein training the DCTL model comprises: initializing a N-layer deep convolutional transform corresponding to the plurality of LR image patches of the target modality, the N-layer deep convolutional transform corresponding to the plurality of HR image patches of the guidance modality, and a non-convolutional fusing transform; initializing a plurality of target features corresponding to the plurality of LR image patches of the target modality, and a plurality of guidance features corresponding to the plurality of HR image patches of the guidance modality with a null value; learning an updated N-layer deep convolutional transform corresponding to the plurality of LR image patches of the target modality, an updated N-layer deep convolutional transform corresponding to the plurality of HR image patches of the guidance modality, an updated non-convolutional fusing transform, an updated plurality of target features, and an updated plurality of guidance features, using a joint learning formulation for a Multi-modal Image Super-Resolution (MISR), wherein the joint learning formulation comprises updating the plurality of target features of the N-layer deep convolutional transform corresponding to the plurality of LR image patches of the target modality, the plurality of guidance features of the N-layer deep convolutional transform corresponding to the plurality of HR image patches of the guidance modality, the N-layer deep convolutional transform corresponding to the plurality of LR image patches of the target modality, the N-layer deep convolutional transform corresponding to the plurality of HR image patches of the guidance modality, and the non-convolutional fusing transform; and iteratively updating the N-layer deep convolutional transform corresponding to the plurality of LR image patches of the target modality, the N-layer deep convolutional transform corresponding to the plurality of HR image patches of the guidance modality, the non-convolutional fusing transform, the plurality of target features, and the plurality of guidance features, until convergence of an objective function of the joint learning formulation is achieved, to generate the trained DCTL model, wherein the convergence of the objective function is determined by identifying if difference in a value of the objective function of a current iteration and a previous iteration is less than an empirically determined threshold value.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary system for multimodal image super-resolution (MISR) using a deep convolutional transform learning (DCTL), in accordance with some embodiments of the present disclosure.
FIG. 2 depicts an architecture diagram for the MISR using the DCTL, in accordance with some embodiments of the present disclosure.
FIGS. 3A, and 3B depict a flow diagram illustrating a method for the MISR using the DCTL, using the system of FIG. 1, in accordance with some embodiments of the present disclosure.
FIG. 4 depicts a DCTL-MISR convergence plot, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following embodiments described herein.

Diverse imaging modalities like Multispectral (MS), Near Infrared (NIR), and RGB, are required for processing data of real-world situations, each capturing different aspects of the same scene. These imaging modalities often vary in spatial resolution and spectral resolution. Hence, Multi-modal Image Super-Resolution (MISR) techniques are required to improve the spatial/spectral resolution of a target modality, taking help from High Resolution (HR) images of a guidance modality that shares common features like textures, edges, and other structures. Traditional MISR approaches using Convolutional Neural Networks (CNNs) typically employ an encoder-decoder architecture, which is prone to overfit in data limited application scenarios. Obtaining the HR target and guidance images for training is a challenge in many practical application scenarios, particularly in remote sensing. Hence, there is a need for methods that work with limited training data for the MISR.

Embodiments herein provide a method and system for MISR using a deep convolutional transform learning (DCTL). The disclosed method uses deep convolutional transforms in a fusion framework that eliminates the need for a decoder network. This reduces the trainable parameters and enhances suitability for the data-limited application scenarios. The method implements a joint learning formulation, which learns the deep convolutional transforms for Low Resolution (LR) images of the target modality and HR images of the guidance modality, along with a non-convolutional fusing transform, target features corresponding to the LR images of the target modality, and guidance features corresponding to the HR images of the guidance modality, to reconstruct the HR images of the target modality. Unlike conventional CNN-based methods, which adopt an encoder-decoder architecture for the MISR, the disclosed method fuses information from both the target modality and the guidance modality for the MISR, thereby requiring fewer learning parameters. The goal of the MISR is to enhance the plurality of LR images of the target modality by taking guidance from the plurality of HR images of the guidance modality. Also, the disclosed method ensures that the learned deep convolutional transforms (filters) are mutually distinct to promote diversity in learning effective representations, which is not guaranteed in the CNN-based methods.

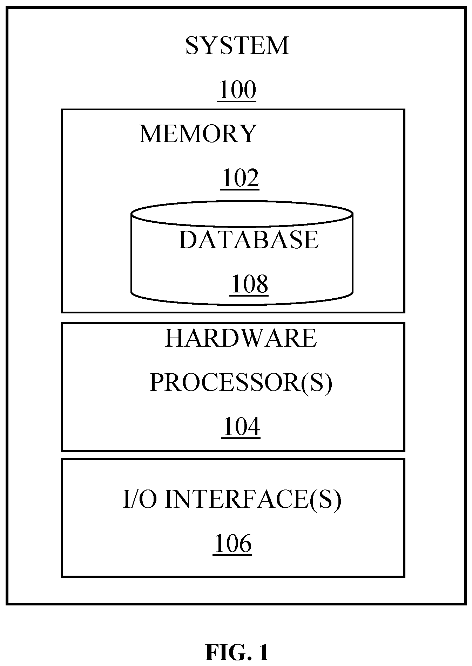

Referring now to the drawings, and more particularly to FIG. 1 through FIG. 4, where similar reference characters denote corresponding features consistently throughout the figures, there are shown preferred embodiments, and these embodiments are described in the context of the following exemplary system and/or method.

FIG. 1 is a functional block diagram of a system 100 for expressing the telepresence robot internal states using combination of multiple modalities, in accordance with some embodiments of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors.

Referring to the components of the system 100, in an embodiment, the processor (s) 104 can be the one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the processor(s) 104 is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface (s) 106 can include one or more ports for connecting a number of devices to one another or to another server.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. Thus, the memory 102 may comprise information pertaining to input(s)/output(s) of each step performed by the processor(s) 104 of the system 100 and methods of the present disclosure. In an embodiment, a database 108 is comprised in the memory 102, wherein the database 108 comprises information on a plurality of input images comprising a plurality of LR images of the target modality, a plurality of HR images of the guidance modality, a plurality of HR images of the target modality, a plurality of LR image patches of the target modality, a plurality of HR image patches of the guidance modality, and a plurality of HR image patches of the target modality, a N-layer deep convolutional transform corresponding to the plurality of LR image patches of the target modality, a N-layer deep convolutional transform corresponding to the plurality of HR image patches of the guidance modality, and the non-convolutional fusing transform.

The memory 102 further comprises information on a plurality of target features corresponding to the plurality of LR image patches of the target modality, a plurality of guidance features corresponding to the plurality of HR image patches of the guidance modality, and a threshold value. The memory 102 further comprises a plurality of modules (not shown) for various technique(s) such as the joint learning formulation using the DCTL for the MISR, and an Adaptive Moment Estimation (Adam) optimizer. The above-mentioned technique(s) are implemented as at least one of a logically self-contained part of a software program, a self-contained hardware component, and/or, a self-contained hardware component with a logically self-contained part of a software program embedded into each of the hardware component (e.g., hardware processor 104 or memory 102) that when executed perform the method described herein.

The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

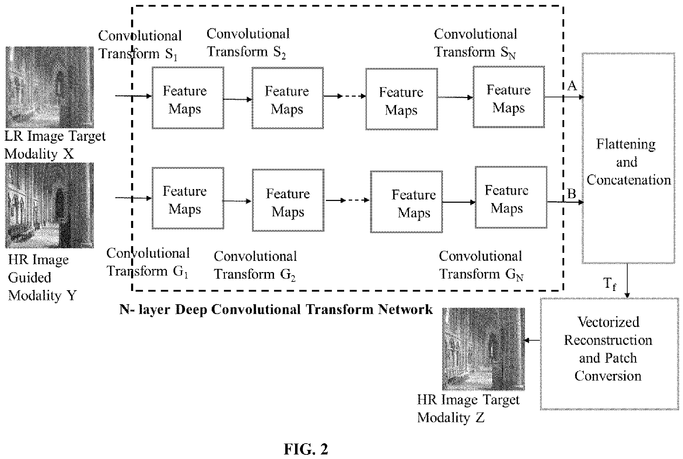

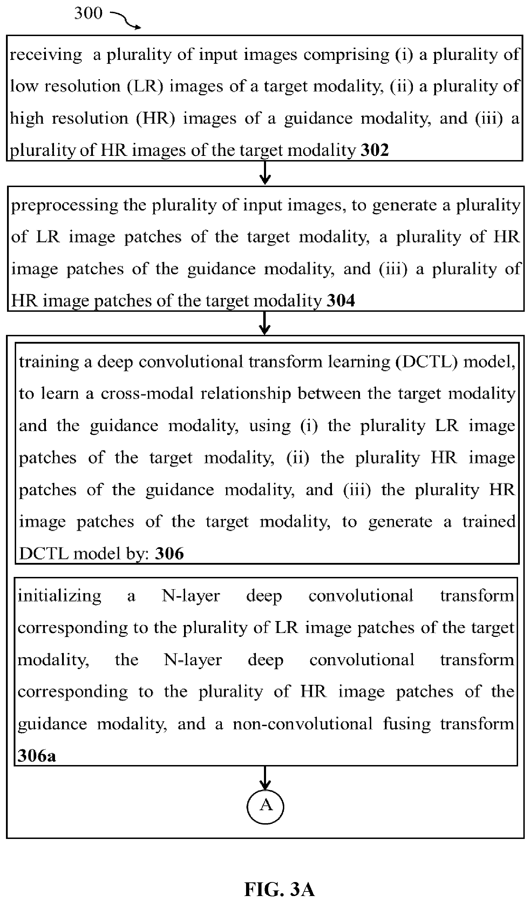

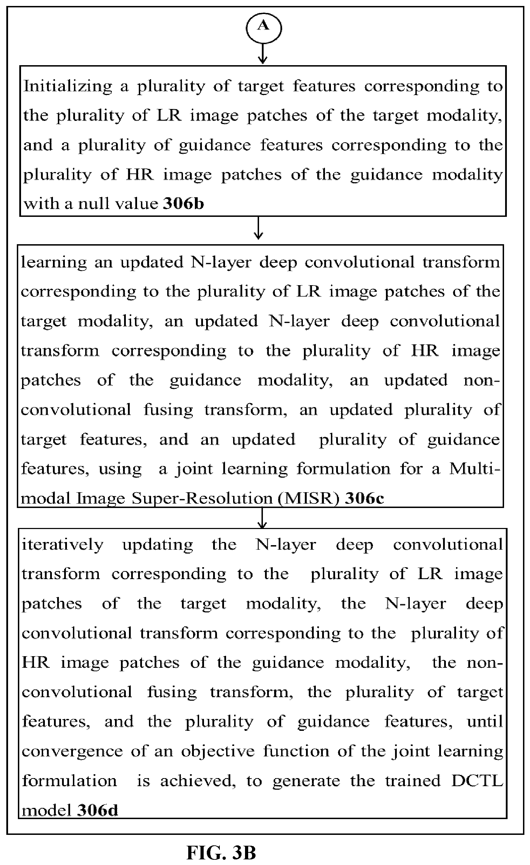

FIG. 2 depicts an architecture diagram for the MISR using the DCTL, in accordance with some embodiments of the present disclosure. More specifically FIG. 2 depicts the MISR to generate the plurality of HR images of the target modality *Z* from the plurality LR images of target modality *X*, guided by the plurality of HR images of the guidance modality *Y.* Although the plurality LR images of target modality *X,* and the plurality of HR images of the guidance modality *Y* contain distinct features, since they capture the same scene, they share common features such as edges, textures, and shapes that can be exploited for tasks of the MISR. In a N- layer Deep Convolutional Transform Network component of FIG. 2, given the knowledge of the plurality of HR images of the target modality *Z,* the N-layer deep convolutional transform *S* and the N-layer deep convolutional transform *G* are learned corresponding to the target modality *X* and the guidance modality *Y,* respectively. The plurality of target features *A* corresponding to the plurality of LR images of the target modality *X,* and the plurality of guidance features *B* corresponding to the plurality of HR images of the guidance modality *Y* are augmented and the non-convolutional fusing transform *T_{f}* is learned that acts as a fully connected layer to generate the plurality of HR images of the target modality *Z.* Flattening and concatenating component in FIG. 2 performs flattening and concatenation of the plurality of target features *A* and the plurality of guidance features *B*. Further the vectorized reconstruction and patch conversion component generate the plurality of HR images of the target modality *Z.* A detailed explanation of the working of FIG. 2 is provided in FIGS. 3A, and 3B using steps 302 through 306.

FIGS. 3A, and 3B depict a flow diagram illustrating a method 300 for the MISR using the DCTL according to some embodiments of the present disclosure. In an embodiment, the system 100 comprises one or more data storage devices or the memory 104 operatively coupled to the one or more hardware processor(s) 102 and is configured to store instructions for execution of steps of the method 300 by the processor(s) or one or more hardware processors 102. The steps of the method 300 of the present disclosure will now be explained with reference to the components or blocks of the system 100 as depicted in FIG. 1 and the steps of flow diagram as depicted in FIGS. 3A, and 3B. The method 300 may be described in the general context of computer executable instructions. Generally, computer executable instructions can include routines, programs, objects, components, data structures, procedures, modules, functions, etc., that perform particular functions or implement particular abstract data types. The method 300 may also be practiced in a distributed computing environment where functions are performed by remote processing devices that are linked through a communication network. The order in which the method 300 is described is not intended to be construed as a limitation, and any number of the described method blocks can be combined in any order to implement the method 300, or an alternative method. Furthermore, the method 300 can be implemented in any suitable hardware, software, firmware, or combination thereof.

Now referring to FIG. 3A, at step 302 of the method 300, the one or more hardware processors 104 are configured to receive the plurality of input images comprising (i) the plurality of LR images of the target modality, (ii) the plurality of HR images of the guidance modality, and (iii) the plurality of HR images of the target modality.

Further, at step 304 of the method 300, the one or more hardware processors are configured to preprocess the plurality of input images, to generate the plurality of LR image patches of the target modality, the plurality of HR image patches of the guidance modality, and the plurality of HR image patches of the target modality. The preprocessing comprises of dividing (i) the plurality of LR images of the target modality into the plurality of LR image patches of the target modality, (ii) the plurality of HR images of the guidance modality into the plurality of HR image patches of the guidance modality, and (iii) the plurality of HR images of the target modality into the plurality of HR image patches of the target modality.

Further, at step 306 of the method 300, the one or more hardware processors are configured to train the DCTL model, to learn a cross-modal relationship between the target modality and the guidance modality, using (i) the plurality LR image patches of the target modality, (ii) the plurality HR image patches of the guidance modality, and (iii) the plurality HR image patches of the target modality, to generate a trained DCTL model. Training the DCTL model is explained through steps 306a to 306d. At step 306a the N-layer deep convolutional transform corresponding to the plurality of LR image patches of the target modality, the N-layer deep convolutional transform corresponding to the plurality of HR image patches of the guidance modality, and the non-convolutional fusing transform are initialized. The N-layer deep convolutional transform corresponding to the plurality of LR image patches of the target modality, the N-layer deep convolutional transform corresponding to the plurality of HR image patches of the guidance modality, and the non-convolutional fusing transform are initialized to a plurality of random matrices with real numbers between 0 and 1 drawn from a uniform distribution, in accordance with some embodiments of the present disclosure.

Referring to FIG. 3B, at step 306b of the method 300, the plurality of target features corresponding to the plurality of LR image patches of the target modality, and the plurality of guidance features corresponding to the plurality of HR image patches of the guidance modality are initialized with a null value. The plurality of target features comprises a low-frequency information of the target modality, and the plurality of guidance features comprises a high-frequency information of the target modality.

Further at step 306c the method learns an updated N-layer deep convolutional transform corresponding to the plurality of LR image patches of the target modality, an updated N-layer deep convolutional transform corresponding to the plurality of HR image patches of the guidance modality, an updated non-convolutional fusing transform, an updated plurality of target features, and an updated plurality of guidance features, using the joint learning formulation for the MISR. The joint learning formulation comprises updating the plurality of target features of the N-layer deep convolutional transform corresponding to the plurality of LR image patches of the target modality, the plurality of guidance features of the N-layer deep convolutional transform corresponding to the plurality of HR image patches of the guidance modality, the N-layer deep convolutional transform corresponding to the plurality of LR image patches of the target modality, the N-layer deep convolutional transform corresponding to the plurality of HR image patches of the guidance modality, and the non-convolutional fusing transform.

The disclosed method utilizes a DCTL framework to address a MISR problem. The disclosed method is also referred to as a DCTL-MISR method, in accordance with some embodiments of the present disclosure. The method employs the joint learning formulation for learning the N-layer deep convolutional transform corresponding to the plurality of LR image patches of the target modality, the N-layer deep convolutional transform corresponding to the plurality of HR image patches of the guidance modality, the plurality of target features, and the plurality of guidance features, from the plurality of LR image patches of the target modality, and the plurality of HR image patches of the guidance modality. Further the non-convolutional fusing transform is learned that combines modality specific features from the plurality of target features, and the plurality of guidance features, to effectively generate the plurality of HR images of the target modality *Z.*

Convolutional Transform Learning (CTL) involves learning convolutional transforms (filters) from data or signals in an unsupervised setting. Given a dataset comprising *K* measurements, each of dimension *d,* the goal is to learn a set of *M* convolutional transforms to generate a corresponding set of features or coefficients, employing a standard formulation: $\begin{matrix}min {\sum }_{i = 1}^{K} {\sum }_{m = 1}^{M} \left({\left‖{t}_{m}∗{x}_{i}-{a}_{m , i}\right‖}_{2}^{2}+ϕ\left({a}_{m , i}\right)++μ{\left‖T\right‖}_{F}^{2}-λlog det\left(T\right)\right. \\ \left\{{t}_{m}\right\} , \left\{{a}_{m , i}\right\}\end{matrix}$ where * denotes a convolutional operation and *ϕ* is a regularization imposed on the coefficients *a_{m,i}* to avoid overfitting. Here, *det*(*T* ) denotes the determinant of *T* where T = [*t*₁|*t*₂|...|*t_{M}*], that concatenates all the convolutional transforms. The additional constraints on the *T* with hyperparameters *λ* and *µ* are included to prevent trivial and degenerate solutions (*T =* 0, *A =* 0 and *T* → ∞*,A* → ∞, *where A =* [*a*_{1,*i*}|*a*_{2,*i*}|...|*a_{M,i}*]1 ≤ *i* ≤ *K*). These additional constraints ensure that the learned convolutional transforms are unique, which is not accounted for in CNNs. Re-writing equation (1) in matrix form results in: ${min}_{T , A} {\left‖T⋅X-A\right‖}_{2}^{2} + Φ \left(A\right) + μ {\left‖T\right‖}_{F}^{2} - λlog det \left(T\right)$

Here *A* is the coefficient (features) and with the data *X =* [*x*₁|*x*₂|*x_{K}*], $T ⋅ X = \left(\begin{matrix}{t}_{1} ∗ {x}_{1} & … & {t}_{M} ∗ {x}_{1} \\ . & & . \\ . & & . \\ {t}_{1} ∗ {x}_{K} & … & {t}_{1} ∗ {x}_{K}\end{matrix}\right)$ the *Φ*(*A*) denotes a penalty term on the coefficients with $Φ \left(A\right) = {\sum }_{m = 1}^{M} ϕ \left({a}_{m , i}\right)$.

An Alternating Minimization (AM) method as known in the art is employed to solve equation (2), which iteratively computes *T* and *A* in a sequential manner.

The disclosed method utilizes the DCTL framework to address a MISR problem using the joint learning formulation. The deep version of CTL, referred to as the DCTL is formulated by stacking multiple convolutional transforms one after the other to generate the plurality of target features and the plurality of guidance features. The formulation for N-layer DCTL in matrix form is expressed as: $\begin{matrix}min {\left‖{T}_{N}⋅\left({T}_{N - 1}⋅\left(…\left({T}_{1}⋅X\right)\right)\right)-A\right‖}_{2}^{2} + Φ \left(A\right) + {\sum }_{j = 1}^{N} \left\{μ{\left‖{T}_{j}\right‖}_{F}^{2}-λlog det\left({T}_{j}\right)\right\} \\ {T}_{j ′ s} , A\end{matrix}$ where *j* = 1,..,*N* denotes the different layers of the N-layer deep convolutional transform network. The solution to the problem in (3) can be obtained using an alternating proximal minimization algorithm.

The objective of the MISR using the DCTL framework is to generate the plurality of HR images of target modality *Z* from the plurality of LR images of target modality *X,* guided by the plurality of HR images of guidance modality *Y.* Although the plurality of LR images of target modality and the plurality of HR images of guidance modality *Y* contain distinct features, since they capture the same scene, they share common features such as edges, textures, and shapes that can be exploited for the tasks of the MISR. The disclosed method employs the DCTL framework to exploit the correlation among different modalities in a supervised setting for the MISR. Given the knowledge of HR images of target modality *Z,* the N-layer deep convolutional transform *S* corresponding to the plurality of LR image patches of the target modality *X* and the N-layer deep convolutional transform *G* corresponding to the plurality of HR image patches of the guidance modality *Y* are learned. The plurality of target features *A* of the N-layer deep convolutional transform corresponding to the plurality of LR image patches of the target modality, and the plurality of guidance features *B* of the N-layer deep convolutional transform corresponding to the plurality of HR image patches of the guidance modality are augmented and the non-convolutional fusing transform is learned that acts as a fully connected layer to generate the plurality of HR images of the target modality *Z.*

The updated N-layer deep convolutional transform corresponding to the plurality of LR image patches of the target modality, the updated N-layer deep convolutional transform corresponding to the plurality of HR image patches of the guidance modality, and the updated non-convolutional fusing transform, are learned using the joint learning formulation for the MISR. In the training phase, the cross-modal relationship between different imaging modalities is learned that essentially extracts the low-frequency information from *X* and high-frequency information from *Y* and effectively combines them to synthesize the target modality *Z.* The disclosed joint learning formulation for the MISR employing the N-layer DCTL is expressed as follows: $\begin{matrix}min {\left‖{S}_{N}⋅\left({S}_{N - 1}⋅\left(…\left({S}_{1}⋅X\right)\right)\right)-A\right‖}_{2}^{2} + Φ \left(A\right) + Φ \left(B\right) + \\ {S}_{j , s} , {G}_{j , s} , A , B , {T}_{f} \\ {\left‖{G}_{N}⋅\left({G}_{N - 1}⋅\left(…\left({G}_{1}⋅Y\right)\right)\right)-B\right‖}_{2}^{2} + γ {\left‖Ψ\left({T}_{f}{\left[\left.{A}^{T}\right|{B}^{T}\right]}^{T}\right)-Z\right‖}_{2}^{2} + \\ μ {\left‖{T}_{f}\right‖}_{F}^{2} - λlog det \left({T}_{f}\right) + {\sum }_{j = 1}^{N} \left.{μ}_{s}{\left‖{S}_{j}\right‖}_{F}^{2}-{λ}_{s}log det\left({S}_{j}\right)\right\} + \\ {\sum }_{j = 1}^{N} \left.{μ}_{g}{\left‖{G}_{j}\right‖}_{F}^{2}-{λ}_{g}log det\left({G}_{j}\right)\right\}\end{matrix}$

The first four terms in the equation (4) is used for learning the N-layer deep convolutional transform *S* corresponding to the plurality of LR image patches of the target modality *X*, the N-layer deep convolutional transform *G* corresponding to the plurality of HR image patches of the guidance modality *Y,* the plurality of target features *A* of the N-layer deep convolutional transform *S* corresponding to the plurality of LR image patches of the target modality *X,* the plurality of guidance features *B* of the N-layer deep convolutional transform *G* corresponding to the plurality of HR image patches of the guidance modality *Y.* The fifth term is used for learning the fusing transform *T_{f}* on the plurality of target features *A* and the plurality of guidance features *B* obtained from the individual modalities to generate the target modality *Z.* Here, the penalty function *Φ* is a Rectified Linear Unit (ReLU) activation function and *Ψ* denotes a Sigmoid function. The remaining terms in equation (4) are related to the additional constraints on the deep convolutional transforms that allows unique deep convolutional transforms to be learnt. The hyperparameters *µₛ*, *λₛ*, *µ_{g}*, *λ_{g}*, *µ, λ,* and *γ* control the tradeoff between the data fidelity and regularization terms.

Since the *Z* is known during training, the non-convolutional fusing transform *T_{f}* can never result in a trivial or degenerate solution. Hence the additional constraints on *T_{f}* in equation (4) can be relaxed, resulting in the modified formulation: $\begin{matrix}min {\left‖{S}_{N}⋅\left({S}_{N - 1}⋅\left(…\left({S}_{1}⋅X\right)\right)\right)-A\right‖}_{2}^{2} + Φ \left(A\right) + Φ \left(B\right) + \\ {S}_{j ′ s} , {G}_{j ′ s} , A , B , {T}_{f} \\ {\left‖{G}_{N}⋅\left({G}_{N - 1}⋅\left(…\left({G}_{1}⋅Y\right)\right)\right)-B\right‖}_{2}^{2} + γ {\left‖Ψ\left({T}_{f}{\left[\left.{A}^{T}\right|{B}^{T}\right]}^{T}\right)-Z\right‖}_{2}^{2} + \\ {\sum }_{j = 1}^{N} \left.{μ}_{s}{\left‖{S}_{j}\right‖}_{F}^{2}-{λ}_{s}log det\left({S}_{j}\right)\right\} + {\sum }_{j = 1}^{N} \left.{μ}_{g}{\left‖{G}_{j}\right‖}_{F}^{2}-{λ}_{g}log det\left({G}_{j}\right)\right\}\end{matrix}$

The above problem can be solved using an Adaptive Moment Estimation (Adam) optimizer. The plurality of target features of the N-layer deep convolutional transform corresponding to the plurality of LR image patches of the target modality, in the equation (5) are updated using (a) the N-layer deep convolutional transform corresponding to the plurality of LR image patches of the target modality, (b) the plurality of LR image patches of the target modality (c) regularization of the plurality of target features to retain positive values of the plurality of target features, using the ReLU activation function, (d) the non-convolutional fusing transform, (e) the plurality of guidance features of the N-layer deep convolutional transform corresponding to the plurality of HR image patches of the guidance modality, and (f) the plurality of HR image patches of the target modality.

Further the plurality of guidance features of the N-layer deep convolutional transform corresponding to the plurality of HR image patches of the guidance modality are updated, using (a) the N-layer deep convolutional transform corresponding to the plurality of HR image patches of the guidance modality, (b) the plurality of HR image patches of the guidance modality (c) regularization of the plurality of guidance features to retain positive values of the plurality of guidance features, using the ReLU activation function, and (d) the non-convolutional fusing transform, (e) the plurality of target features of the N-layer deep convolutional transform corresponding to the plurality of LR image patches of the target modality, and (f) the plurality of HR image patches of the target modality.

Further the N-layer deep convolutional transform corresponding to the plurality of LR image patches of the target modality are updated, using the plurality of LR image patches of the target modality, the plurality of updated target features, and a plurality of additional regularization terms to avoid one or more trivial and degenerate solutions and ensure that the learned N-layer deep convolutional transform corresponding to the plurality of the LR image patches of the target modality is unique, to generate the updated N-layer deep convolutional transform corresponding to the plurality of LR image patches of the target modality.

Finally the N-layer deep convolutional transform corresponding to the plurality of HR image patches of the guidance modality are updated, using the plurality of HR image patches of the guidance modality, the plurality of updated guidance features, and the plurality of additional regularization terms to avoid the one or more trivial and degenerate solutions and ensure that the learned N-layer deep convolutional transform corresponding to the plurality of HR image patches of the guidance modality is unique, to generate the updated N-layer deep convolutional transform corresponding to the plurality of HR image patches of the guidance modality.

Further the method performs flattening on the plurality of target features and the plurality of guidance features and concatenates the plurality of target features and the plurality of guidance features, to generate a plurality of concatenated features. The non-convolutional fusing transform is updated using the plurality of HR image patches of the target modality and the plurality of concatenated features.

At step 306d of method 300 iteratively updates the N-layer deep convolutional transform corresponding to the plurality of LR image patches of the target modality, the N-layer deep convolutional transform corresponding to the plurality of HR image patches of the guidance modality, the non-convolutional fusing transform, the plurality of target features, and the plurality of guidance features, until convergence of the objective function of the joint learning formulation is achieved, to generate the trained DCTL. The convergence of the objective function is determined by identifying if the difference in the value of the objective function of a current iteration and a previous iteration is less than an empirically determined threshold value. The empirically determined threshold value 0.0001 is used according to some embodiments of present disclosure.

The trained DCTL model comprising the learned N- layer deep convolutional transform corresponding to the plurality of LR image patches of the target modality, the learned N-layer deep convolutional transform corresponding to the plurality of HR image patches of the guidance modality, and the learned non-convolutional fusing transform, during inferencing stage, performs the MISR by:
(a) Receiving a new LR image of the target modality, and a new HR image of the guidance modality.
(b) Dividing the new LR image of the target modality, and the new HR image of the guidance modality, to generate a plurality of new LR image patches of the target modality, and a plurality of new HR images patches of the guidance modality.
(c) Computing a plurality of new target features of the N-layer deep convolutional transform corresponding to the plurality of new LR image patches of the target modality, using the learned N-layer deep convolutional transform corresponding to the plurality of LR image patches of the target modality, and the plurality of new LR image patches of the target modality.
(d) Computing a plurality of new guidance features of the N-layer deep convolutional transform corresponding to the plurality of new HR image patches of the guidance modality, using the learned N-layer deep convolutional transform corresponding to the plurality of HR image patches of the guidance modality, and the plurality of new HR image patches of the guidance modality.
(e) Flattening and concatenating the plurality of new target features, and the plurality of new guidance features, to generate a plurality of new concatenated features.
(f) Estimating a plurality of new HR image patches of the target modality using the learned non-convolutional fusing transform on the plurality of new concatenated features.
(g) Obtaining the new HR image of the target modality by combining the plurality of new HR image patches of the target modality.

### Experimental Results

The experimental results describe the datasets and benchmark methods used for evaluating the performance of the disclosed method 300 for MISR. The disclosed invention cconsiders the publicly available Red Green Blue- multi-spectral (RGB-MS) dataset and Red Green Blue Near-infrared (RGB-NIR) dataset for the MISR. Both these datasets contain HR images of the different imaging modalities. For experimental results the RGB is taken as the guidance modality for both datasets, while MS/NIR serves as the target modality for the respective datasets. The plurality of LR images of the target modality is generated by downsizing the plurality of HR images by a factor and applying bicubic interpolation to upscale by the same factor, The downsizing factor of 4 is considered for experimentation to demonstrate the MISR performance, according with some embodiments of the present disclosure. Further eight different MISR techniques based on filtering and learning-based paradigms are employed for benchmarking. Filtering-based methods consider Joint image Restoration (JR), Joint Bilateral Filtering (JBF), and Guided image Filtering (GF). The learning-based methods include deep learning-based Guided Pixel to Pixel Transformation (Pix to Pix) and sparse representation learning techniques, namely Coupled Dictionary Learning (Coupled DL), Joint Coupled Transform Learning (JCTL) and Joint Coupled Deep Transform Learning (JCDTL) and a Multimodal Convolutional Dictionary Learning (MCDL).

**Table. 1A**

| **RGB-NIR Dataset** | | | | | | |
|---|---|---|---|---|---|---|
| | **Indoor 4** | | **Indoor 5** | | **Indoor 11** | |
| **Method** | **PSNR** | **SSIM** | **PSNR** | **SSIM** | **PSNR** | **SSIM** |
| **Disclosed DCTL-MISR** | **33.909** | 0.933 | **35.221** | 0.949 | **31.648** | 0.911 |
| **CTL-MISR** | 32.649 | 0.922 | 33.513 | 0.941 | 31.534 | 0.908 |
| **MCDL** | 28.932 | 0.902 | 28.307 | 0.908 | 28.874 | 0.842 |
| **JCDTL** | 28.783 | 0.899 | 30.414 | 0.915 | 30.384 | 0.903 |
| **JCTL** | 27.961 | 0.915 | 30.58 | 0.937 | 26.808 | 0.893 |
| **Coupled DL** | 30.629 | 0.941 | 29.865 | 0.951 | 28.879 | 0.896 |
| **Pix to Pix** | 27.702 | 0.942 | 33.726 | 0.966 | 26.515 | **0.919** |
| **JR** | 22.271 | 0.841 | 25.076 | 0.939 | 22.864 | 0.815 |
| **GF** | 29.854 | **0.946** | 32.052 | **0.971** | 27.589 | 0.901 |
| **JBF** | 26.354 | 0.919 | 31.283 | 0.968 | 26.48 | 0.906 |

**Table. 1B**

| **RGB-NIR Dataset** | | | | |
|---|---|---|---|---|
| | **Indoor 16** | | **Indoor21** | |
| **Method** | **PSNR** | **SSIM** | **PSNR** | **SSIM** |
| **Disclosed DCTL-MISR** | **36.443** | **0.951** | **32.561** | **0.921** |
| **CTL-MISR** | 34.219 | 0.941 | 31.696 | 0.91 |
| **MCDL** | 30.601 | 0.914 | 28.787 | 0.865 |
| **JCDTL** | 32.018 | 0.916 | 29.442 | 0.893 |
| **JCTL** | 30.438 | 0.925 | 26.554 | 0.895 |
| **Coupled DL** | 33.07 | 0.95 | 29.668 | 0.915 |
| **Pix to Pix** | 31.071 | 0.941 | 25.703 | 0.903 |
| **JR** | 23.502 | 0.867 | 21.626 | 0.794 |
| **GF** | 31.916 | 0.938 | 27.133 | 0.909 |
| **JBF** | 30.431 | 0.929 | 25.746 | 0.902 |

**Table. 1C**

| **RGB-MS Dataset** | | | | | | |
|---|---|---|---|---|---|---|
| | **Imge6** | | **Imge7** | | **Imgf5** | |
| **Method** | **PSNR** | **SSIM** | **PSNR** | **SSIM** | PSNR | SSIM |
| **Disclosed DCTL-MISR** | **34.271** | **0.891** | **42.674** | 0.984 | **43.051** | **0.982** |
| **CTL-MISR** | 33.597 | 0.883 | 39.969 | 0.973 | 40.979 | 0.972 |
| **MCDL** | 25.477 | 0.605 | 28.955 | 0.709 | 33.426 | 0.88 |
| **JCDTL** | 31.441 | 0.841 | 35.496 | 0.899 | 37.522 | 0.947 |
| **JCTL** | 28.793 | 0.814 | 32.669 | 0.889 | 36.277 | 0.939 |
| **Coupled DL** | 31.049 | 0.835 | 33.222 | 0.877 | 34.239 | 0.906 |
| **Pix to Pix** | 29.726 | 0.875 | 42.218 | **0.988** | 37.861 | 0.978 |
| **JR** | 26.519 | 0.814 | 32.781 | 0.889 | 33.933 | 0.89 |
| **GF** | 25.332 | 0.774 | 29.709 | 0.869 | 31.706 | 0.901 |
| **JBF** | 25.535 | 0.746 | 29.655 | 0.799 | 32.411 | 0.886 |

**Table. 1D**

| **RGB-MS Dataset** | | | | |
|---|---|---|---|---|
| | **Imgf7** | | **Imgh3** | |
| **Method** | **PSNR** | **SSIM** | **PSNR** | **SSIM** |
| **Disclosed DCTL-MISR** | **36.191** | **0.948** | **45.453** | **0.985** |
| **CTL-MISR** | 34.508 | 0.933 | 43.186 | 0.981 |
| **MCDL** | 27.894 | 0.722 | 35.564 | 0.896 |
| **JCDTL** | 33.339 | 0.888 | 39.403 | 0.948 |
| **JCTL** | 31.964 | 0.864 | 37.14 | 0.941 |
| **Coupled DL** | 31.401 | 0.878 | 36.107 | 0.92 |
| **Pix to Pix** | 31.721 | 0.942 | 37.421 | 0.974 |
| **JR** | 29.295 | 0.804 | 33.999 | 0.922 |

Tables 1A, 1B, 1C, and 1D summarize reconstruction results obtained with different approaches on both datasets, assessed in terms of Peak Signal to Noise Ratio (PSNR) (dB) and Structural SIMilarity (SSIM) metrics. The results for the RGB-MS are reported for 640 nm. The RGB images are converted to grayscale and used as guidance. The training is carried out using 31 and 35 images of size 512×512 for RGB-NIR and RGB-MS datasets, respectively, for all the learning-based methods. Each image is normalized and divided into non-overlapping patches of size 16×16. During the inference stage, the individual reconstructed images patches were combined to generate the full image for all the learning-based methods except the MCDL, which reconstructs the entire test image directly. In the disclosed method, grid search has been used for tuning the hyperparameters of all the methods for optimal performance. For RGB-NIR dataset, 3-layer DCTL configuration with 5 filters of kernel size 3×3 gave optimal results. On the other hand, for RGB-MS dataset, a 5-layer DCTL configuration with 9 filters of kernel size 3×3 provided the best results. The DCTL-MISR method results obtained with these configurations are presented in Tables. 1A, 1B, 1C, and 1D, along with the shallow (1-layer) variant (CTL-MISR) of the disclosed method to demonstrate the improvement gained with the deep network. Here the same kernel size and number of filters are considered for all the deep layers of the DCTL-MISR.

The MISR results for five random images from each dataset are reported in Tables. 1A, 1B, 1C, and 1D for comparative analysis. The highest and second highest values of the PSNR and SSIM are highlighted in bold and underlined, respectively. The disclosed method displays superior performance for RGB-MS dataset with an average improvement >3 dB in PSNR and >1% in SSIM against the best-performing (non-CTL-based) benchmark method. However, although the PSNR is consistently good for RGB-NIR dataset with an average PSNR>2 dB (over the best-performing benchmark), the SSIM value is high for most of the images. Among the learning-based MISR techniques, single-stage methods like Coupled DL, JCTL, JCDTL, CTL-MISR and DCTL-MISR that employ a joint-learning paradigm report improved performance compared to the two-stage MCDL approach. In most cases, the results are even superior to the filtering-based (unsupervised) methods. One can observe that CTL-based formulations (CTL-MISR and DCTL-MISR) outperform the standard TL-based approaches, the JCTL, and the JCDTL. This can be attributed to the potential of convolutional filters in extracting effective representations from different modalities for enhanced reconstruction.

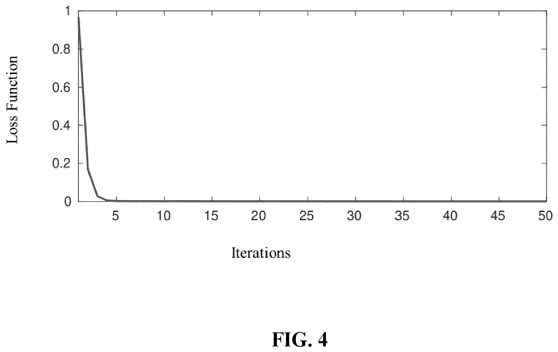

The disclosed DCTL-MISR was implemented in PyTorch, and a batch size of 32 was considered for training with hyperparameters values *µₛ* = *µ_{g}* = 0.0001, *λₛ* = *λ_{g}* = 0.001, *γ* = 1 and learning rate= 0.001. FIG. 4 depicts a DCTL-MISR convergence plot, in accordance with some embodiments of the present disclosure. More specifically FIG. 4 presents the loss plot of the DCTL-MISR method that shows that the algorithm converges quickly within 50 epochs. In terms of time, the disclosed method demonstrates a computational advantage over the dictionary variant (MCDL). DCTL-MISR takes ≈ 15 minutes for training across 50 epochs, compared to 1-2 hours taken by MCDL on an AMD Ryzen 5 4500U CPU@2.3GHz with 16 GB RAM, and < 1 second and ≈ 2.5 seconds, respectively, for testing a single image pair.

Various experiments are carried out with different configurations of the DCTL-MISR method to study the effect of the number of layers, filters, and kernel size on the MISR performance. The average values of the PSNR and the SSIM obtained with different DCTL-MISR configurations are reported in Tables. 2, 3 and 4 for ablation analysis that are computed over all the test images presented in Tables. 1A, 1B, 1C, and 1D. It is noted that a 3-layer and 5-layer DCTL configuration is considered for the RGB-NIR and RGB-MS, respectively, in Tables. 3, and 4 since they gave the best results.

**Table. 2**

| **EFFECT OF NUMBER OF LAYERS (N)** | | | | |
|---|---|---|---|---|
| **# Layers (N)** | **RGB-NIR** | | **RGB-MS** | |
| | PSNR | SSIM | PSNR | SSIM |
| **1** | 32.552 | 0.922 | 37.228 | 0.956 |
| **2** | 32.051 | 0.913 | 38.124 | 0.961 |
| **3** | **33.653** | **0.933** | 38.098 | 0.956 |
| **4** | 33.651 | 0.929 | 39.045 | 0.963 |
| **5** | 33.612 | 0.928 | **39.344** | **0.966** |
| **6** | 33.641 | 0.931 | 38.765 | 0.963 |

**Table. 3**

| **EFFECT OF NUMBER OF FILTERS (M)** | | | | |
|---|---|---|---|---|
| **# Filters (M) RGB-NIR** | **RGB-NIR** | | **RGB-MS** | |
| | **PSNR** | **SSIM** | **PSNR** | **SSIM** |
| **3** | 33.294 | 0.932 | 37.067 | 0.939 |
| **5** | **33.653** | **0.933** | 38.493 | 0.956 |
| **9** | 33.228 | 0.925 | **39.344** | **0.966** |
| **12** | 32.871 | 0.918 | 36.845 | 0.954 |

**Table. 4**

| | **EFFECT OF KERNEL SIZE** | | | |
|---|---|---|---|---|
| **Kernel Size** | **RGB-NIR (*M* = 5)** | | **RGB-MS (*M* = 9)** | |
| | **PSNR** | **SSIM** | **PSNR** | **SSIM** |
| 3×3 | **33.653** | **0.933** | **39.344** | **0.966** |
| 5×5 | 33.479 | 0.931 | 37.876 | 0.959 |
| 9×9 | 33.208 | 0.922 | 37.348 | 0.951 |

**Number of Layers N:** The experiments have been conducted considering different number of layers in the DCTL configuration. Here, a 3×3 kernel was used with 5 filters for the RGB-NIR and 9 filters for the RGB-MS, which gave optimal performance as reported in Tables. 1A, 1B, 1C, and 1D. Table. 2 shows that while a 3-layer DCTL configuration works best for the RGB-NIR, a 5-layer DCTL configuration is best suited for the RGB-MS dataset. It is noticed that the improved reconstruction ability of the DCTL MISR (Deep configuration) over the shallow CTL counterpart (CTL-MISR). Deep configuration learns rich information, so the performance keeps improving as deep as saturation is observed. Going deep beyond that point does not yield any significant improvement; in fact, a slight degradation in performance is observed for both datasets, which can be due to overfitting on limited data. Notice an improvement > 1 dB in PSNR and > 1% in SSIM gained with the deep architecture over the shallow (1-layer) counterpart.

**Number of Filters M:** Here, different DCTL-MISR configurations considering 3, 5, 9 and 12 filters with a constant kernel size of 3×3 have been analyzed for performance comparison. Table. 3 shows that 5 and 9 filters result in optimal performance for the RGB-NIR and the RGB-MS, respectively. The performance is suboptimal for other configurations since fewer filters struggle to learn effective representation, and more filters face problems with generalization, especially with limited data.

**Kernel Size:** In this analysis, different kernel sizes of 3×3, 5×5, and 9×9 are studied with M = 5, 9 for the RGB-NIR and RGB-MS datasets, respectively. In Table 4, it is observed that 3×3 kernel performs best for both datasets. Since image patches of size 16×16 is considered, larger kernels tend to lose some local details; hence, a decline in performance is observed for other configurations.

The DCTL-MISR method generates the HR image of target modality from its LR counterpart, leveraging guidance from the HR image of another modality. The disclosed joint learning formulation simultaneously learns the deep convolutional transforms and representations that capture both similarities and differences among various imaging modalities and effectively fuses them for super-resolution tasks. Results demonstrate the ability of the disclosed method to learn effectively with limited training data compared to other benchmark methods.

The written description describes the subject matter herein to enable any person skilled in the art to make and use the embodiments. The scope of the subject matter embodiments is defined herein and may include other modifications that occur to those skilled in the art. Such other modifications are intended to be within the scope of the present disclosure if they have similar elements that do not differ from the literal language of the embodiments or if they include equivalent elements with insubstantial differences from the literal language of the embodiments described herein.

The embodiments of present disclosure herein address unresolved problem of MISR for data limited scenario using the DCTL. The embodiment thus provides the method that uses deep convolutional transforms in a fusion framework that eliminates the need for the decoder network typically used by the CNN-based approaches. This reduces the trainable parameters and enhances suitability for the data-limited application scenarios. The method implements the joint learning formulation, which learns the deep convolutional transforms for the plurality of LR images of the target modality and the plurality of HR images of the guidance modality, along with the non-convolutional fusing transform, the plurality of target features corresponding to the plurality of LR images, and the plurality of guidance features corresponding to the plurality of HR images, to reconstruct the plurality of HR images of the target modality. The method employing the DCTL framework incorporates a supervised joint learning framework to learn the complex dependencies among the different modalities and effectively fuses them for enhancing the resolution of the target modality. Unlike the traditional CNNs-based methods, the disclosed joint learning formulation ensures that the learned deep convolutional transforms are unique, making them suitable for data limited scenarios.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, while the appended claims are to define the scope of protection of the present invention.

## Claims

1. A processor implemented method (300), the method comprising:
receiving (302), via one or more hardware processors, a plurality of input images comprising (i) a plurality of low resolution, LR, images of a target modality, (ii) a plurality of high resolution, HR, images of a guidance modality, and (iii) a plurality of HR images of the target modality;
preprocessing (304), via the one or more hardware processors, the plurality of input images, to generate a plurality of LR image patches of the target modality, a plurality of HR image patches of the guidance modality, and a plurality of HR image patches of the target modality; and
training (306), via the one or more hardware processors, a deep convolutional transform learning, DCTL, model, to learn a cross-modal relationship between the target modality and the guidance modality, using (i) the plurality LR image patches of the target modality, (ii) the plurality HR image patches of the guidance modality, and (iii) the plurality HR image patches of the target modality, to generate a trained DCTL model, wherein training the DCTL model comprises:
(a) initializing (306a) a N-layer deep convolutional transform corresponding to the plurality of LR image patches of the target modality, a N-layer deep convolutional transform corresponding to the plurality of HR image patches of the guidance modality, and a non-convolutional fusing transform;
(b) initializing (306b) a plurality of target features corresponding to the plurality of LR image patches of the target modality, and a plurality of guidance features corresponding to the plurality of HR image patches of the guidance modality with a null value;
(c) learning (306c) an updated N-layer deep convolutional transform corresponding to the plurality of LR image patches of the target modality, an updated N-layer deep convolutional transform corresponding to the plurality of HR image patches of the guidance modality, an updated non-convolutional fusing transform, an updated plurality of target features, and an updated plurality of guidance features, using a joint learning formulation for a Multi-modal Image Super-Resolution, MISR, wherein the joint learning formulation comprises updating the plurality of target features of the N-layer deep convolutional transform corresponding to the plurality of LR image patches of the target modality, the plurality of guidance features of the N-layer deep convolutional transform corresponding to the plurality of HR image patches of the guidance modality, the N-layer deep convolutional transform corresponding to the plurality of LR image patches of the target modality, the N-layer deep convolutional transform corresponding to the plurality of HR image patches of the guidance modality, and the non-convolutional fusing transform; and
(d) iteratively (306d) updating the N-layer deep convolutional transform corresponding to the plurality of LR image patches of the target modality, the N-layer deep convolutional transform corresponding to the plurality of HR image patches of the guidance modality, the non-convolutional fusing transform, the plurality of target features, and the plurality of guidance features, until convergence of an objective function of the joint learning formulation is achieved, to generate the trained DCTL model, wherein the convergence of the objective function is determined by identifying if difference in a value of the objective function of a current iteration and a previous iteration is less than an empirically determined threshold value.

2. The processor implemented method as claimed in claim 1, wherein learning the updated N-layer deep convolutional transform corresponding to the plurality of LR image patches of the target modality, the updated N-layer deep convolutional transform corresponding to the plurality of HR image patches of the guidance modality, and the updated non-convolutional fusing transform, using the joint learning formulation for the MISR comprises:
(c.1) updating the plurality of target features of the N-layer deep convolutional transform corresponding to the plurality of LR image patches of the target modality, using
(c.1.1) the N-layer deep convolutional transform corresponding to the plurality of LR image patches of the target modality,
(c.1.2) the plurality of LR image patches of the target modality
(c.1.3) regularization of the plurality of target features to retain positive values of the plurality of target features, using a Rectified Linear Unit (ReLU) activation function,
(c.1.4) the non-convolutional fusing transform,
(c.1.5) the plurality of guidance features of the N-layer deep convolutional transform corresponding to the plurality of HR image patches of the guidance modality, and
(c.1.6) the plurality of HR image patches of the target modality;
(c.2) updating the plurality of guidance features of the N-layer deep convolutional transform corresponding to the plurality of HR image patches of the guidance modality, using
(c.2.1) the N-layer deep convolutional transform corresponding to the plurality of HR image patches of the guidance modality,
(c.2.2) the plurality of HR image patches of the guidance modality
(c.2.3) regularization of the plurality of guidance features to retain positive values of the plurality of guidance features, using the ReLU activation function, and
(c.2.4) the non-convolutional fusing transform,
(c.2.5) the plurality of target features of the N-layer deep convolutional transform corresponding to the plurality of LR image patches of the target modality, and
(c.2.6) the plurality of HR image patches of the target modality;
(c.3) updating the N-layer deep convolutional transform corresponding to the plurality of LR image patches of the target modality, using the plurality of LR image patches of the target modality, the plurality of updated target features, and a plurality of additional regularization terms to avoid one or more trivial and degenerate solutions and ensure that the learned N-layer deep convolutional transform corresponding to the plurality of the LR image patches of the target modality is unique, to generate the updated N-layer deep convolutional transform corresponding to the plurality of LR image patches of the target modality;
(c.4) updating the N-layer deep convolutional transform corresponding to the plurality of HR image patches of the guidance modality, using the plurality of HR image patches of the guidance modality, the plurality of updated guidance features, and the plurality of additional regularization terms to avoid the one or more trivial and degenerate solutions and ensure that the learned N-layer deep convolutional transform corresponding to the plurality of HR image patches of the guidance modality is unique, to generate the updated N-layer deep convolutional transform corresponding to the plurality of HR image patches of the guidance modality;
(c.5) flattening the plurality of target features and the plurality of guidance features, and concatenating the plurality of target features and the plurality of guidance features, to generate a plurality of concatenated features; and
(c.6) updating the non-convolutional fusing transform using the plurality of HR image patches of the target modality and the plurality of concatenated features.

3. The processor implemented method as claimed in claim 1, wherein the plurality of target features comprises a low-frequency information of the target modality, and the plurality of guidance features comprises a high-frequency information of the target modality.

4. The processor implemented method as claimed in claim 1, wherein the trained DCTL model comprising the learned N- layer deep convolutional transform corresponding to the plurality of LR image patches of the target modality, the learned N-layer deep convolutional transform corresponding to the plurality of HR image patches of the guidance modality, and the learned non-convolutional fusing transform, during inferencing stage, performs the MISR by:
(A) receiving a new LR image of the target modality, and a new HR image of the guidance modality;
(B) dividing the new LR image of the target modality, and the new HR image of the guidance modality, to generate a plurality of new LR image patches of the target modality, and a plurality of new HR images patches of the guidance modality;
(C) computing a plurality of new target features of the N-layer deep convolutional transform corresponding to the plurality of new LR image patches of the target modality, using the learned N-layer deep convolutional transform corresponding to the plurality of LR image patches of the target modality, and the plurality of new LR image patches of the target modality;
(D) computing a plurality of new guidance features of the N-layer deep convolutional transform corresponding to the plurality of new HR image patches of the guidance modality, using the learned N-layer deep convolutional transform corresponding to the plurality of HR image patches of the guidance modality, and the plurality of new HR image patches of the guidance modality;
(E) flattening and concatenating the plurality of new target features, and the plurality of new guidance features, to generate a plurality of new concatenated features;
(F) estimating a plurality of new HR image patches of the target modality using the learned non-convolutional fusing transform on the plurality of new concatenated features; and
(G) obtaining the new HR image of the target modality by combining the plurality of new HR image patches of the target modality.

5. A system (100), comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
receive a plurality of input images comprising (i) a plurality of low resolution, LR, images of a target modality, (ii) a plurality of high resolution, HR, images of a guidance modality, and (iii) a plurality of HR images of the target modality;
preprocess the plurality of input images, to generate a plurality of LR image patches of the target modality, a plurality of HR image patches of the guidance modality, and (iii) a plurality of HR image patches of the target modality; and
train a deep convolutional transform learning, DCTL, model, to learn a cross-modal relationship between the target modality and the guidance modality, using (i) the plurality LR image patches of the target modality, (ii) the plurality HR image patches of the guidance modality, and (iii) the plurality HR image patches of the target modality, to generate a trained DCTL model, wherein training the DCTL comprises:
(a) initialize a N-layer deep convolutional transform corresponding to the plurality of LR image patches of the target modality, a N-layer deep convolutional transform corresponding to the plurality of HR image patches of the guidance modality, and a non-convolutional fusing transform;
(b) initialize a plurality of target features corresponding to the plurality of LR image patches of the target modality, and a plurality of guidance features corresponding to the plurality of HR image patches of the guidance modality with a null value;
(c) learn an updated N-layer deep convolutional transform corresponding to the plurality of LR image patches of the target modality, an updated N-layer deep convolutional transform corresponding to the plurality of HR image patches of the guidance modality, an updated non-convolutional fusing transform, an updated plurality of target features, and an updated plurality of guidance features, using a joint learning formulation for a Multi-modal Image Super-Resolution (MISR), wherein the joint learning formulation comprises updating the plurality of target features of the N-layer deep convolutional transform corresponding to the plurality of LR image patches of the target modality, the plurality of guidance features of the N-layer deep convolutional transform corresponding to the plurality of HR image patches of the guidance modality, the N-layer deep convolutional transform corresponding to the plurality of LR image patches of the target modality, the N-layer deep convolutional transform corresponding to the plurality of HR image patches of the guidance modality, and the non-convolutional fusing transform; and
(d) iteratively update the N-layer deep convolutional transform corresponding to the plurality of LR image patches of the target modality, the N-layer deep convolutional transform corresponding to the plurality of HR image patches of the guidance modality, the non-convolutional fusing transform, the plurality of target features, and the plurality of guidance features, until convergence of an objective function of the joint learning formulation is achieved, to generate the trained DCTL model, wherein the convergence of the objective function is determined by identifying if difference in a value of the objective function of a current iteration and a previous iteration is less than an empirically determined threshold value.

6. The system as claimed in claim 5, wherein learning the updated N-layer deep convolutional transform corresponding to the plurality of LR image patches of the target modality, the updated N-layer deep convolutional transform corresponding to the plurality of HR image patches of the guidance modality, and the updated non-convolutional fusing transform, using the joint learning formulation for the MISR comprises:
(c.1) updating the plurality of target features of the N-layer deep convolutional transform corresponding to the plurality of LR image patches of the target modality, using
(c.1.1) the N-layer deep convolutional transform corresponding to the plurality of LR image patches of the target modality,
(c.1.2) the plurality of LR image patches of the target modality
(c.1.3) regularization of the plurality of target features to retain positive values of the plurality of target features, using a Rectified Linear Unit (ReLU) activation function,
(c.1.4) the non-convolutional fusing transform,
(c.1.5) the plurality of guidance features of the N-layer deep convolutional transform corresponding to the plurality of HR image patches of the guidance modality, and
(c.1.6) the plurality of HR image patches of the target modality;
(c.2) updating the plurality of guidance features of the N-layer deep convolutional transform corresponding to the plurality of HR image patches of the guidance modality, using
(c.2.1) the N-layer deep convolutional transform corresponding to the plurality of HR image patches of the guidance modality,
(c.2.2) the plurality of HR image patches of the guidance modality
(c.2.3) regularization of the plurality of guidance features to retain positive values of the plurality of guidance features, using the ReLU activation function, and
(c.2.4) the non-convolutional fusing transform,
(c.2.5) the plurality of target features of the N-layer deep convolutional transform corresponding to the plurality of LR image patches of the target modality, and
(c.2.6) the plurality of HR image patches of the target modality;
(c.3) updating the N-layer deep convolutional transform corresponding to the plurality of LR image patches of the target modality, using the plurality of LR image patches of the target modality, the plurality of updated target features, and a plurality of additional regularization terms to avoid one or more trivial and degenerate solutions and ensure that the learned N-layer deep convolutional transform corresponding to the plurality of the LR image patches of the target modality is unique, to generate the updated N-layer deep convolutional transform corresponding to the plurality of LR image patches of the target modality;
(c.4) updating the N-layer deep convolutional transform corresponding to the plurality of HR image patches of the guidance modality, using the plurality of HR image patches of the guidance modality, the plurality of updated guidance features, and the plurality of additional regularization terms to avoid the one or more trivial and degenerate solutions and ensure that the learned N-layer deep convolutional transform corresponding to the plurality of HR image patches of the guidance modality is unique, to generate the updated N-layer deep convolutional transform corresponding to the plurality of HR image patches of the guidance modality;
(c.5) flattening the plurality of target features and the plurality of guidance features, and concatenating the plurality of target features and the plurality of guidance features, to generate a plurality of concatenated features; and
(c.6) updating the non-convolutional fusing transform using the plurality of HR image patches of the target modality and the plurality of concatenated features.

7. The system as claimed in claim 5, The processor implemented method as claimed in claim 1, wherein the plurality of target features comprises a low-frequency information of the target modality, and the plurality of guidance features comprises a high-frequency information of the target modality.

8. The system as claimed in claim 5, wherein the trained DCTL model comprising the learned N- layer deep convolutional transform corresponding to the plurality of LR image patches of the target modality, the learned N-layer deep convolutional transform corresponding to the plurality of HR image patches of the guidance modality, and the learned non-convolutional fusing transform, during inferencing stage, performs the MISR by:
(A) receiving a new LR image of the target modality, and a new HR image of the guidance modality;
(B) dividing the new LR image of the target modality, and the new HR image of the guidance modality, to generate a plurality of new LR image patches of the target modality, and a plurality of new HR images patches of the guidance modality;
(C) computing a plurality of new target features of the N-layer deep convolutional transform corresponding to the plurality of new LR image patches of the target modality, using the learned N-layer deep convolutional transform corresponding to the plurality of LR image patches of the target modality, and the plurality of new LR image patches of the target modality;
(D) computing a plurality of new guidance features of the N-layer deep convolutional transform corresponding to the plurality of new HR image patches of the guidance modality, using the learned N-layer deep convolutional transform corresponding to the plurality of HR image patches of the guidance modality, and the plurality of new HR image patches of the guidance modality;
(E) flattening and concatenating the plurality of new target features, and the plurality of new guidance features, to generate a plurality of new concatenated features;
(F) estimating a plurality of new HR image patches of the target modality using the learned non-convolutional fusing transform on the plurality of new concatenated features; and
(G) obtaining the new HR image of the target modality by combining the plurality of new HR image patches of the target modality.

9. One or more non-transitory machine-readable information storage mediums comprising one or more instructions which when executed by one or more hardware processors cause:
receiving a plurality of input images comprising (i) a plurality of low resolution, LR, images of a target modality, (ii) a plurality of high resolution, HR, images of a guidance modality, and (iii) a plurality of HR images of the target modality;
preprocessing the plurality of input images, to generate a plurality of LR image patches of the target modality, a plurality of HR image patches of the guidance modality, and a plurality of HR image patches of the target modality; and
training a deep convolutional transform learning, DCTL, model, to learn a cross-modal relationship between the target modality and the guidance modality, using (i) the plurality LR image patches of the target modality, (ii) the plurality HR image patches of the guidance modality, and (iii) the plurality HR image patches of the target modality, to generate a trained DCTL model, wherein training the DCTL model comprises:
(a) initializing a N-layer deep convolutional transform corresponding to the plurality of LR image patches of the target modality, a N-layer deep convolutional transform corresponding to the plurality of HR image patches of the guidance modality, and a non-convolutional fusing transform;
(b) initializing a plurality of target features corresponding to the plurality of LR image patches of the target modality, and a plurality of guidance features corresponding to the plurality of HR image patches of the guidance modality with a null value;
(c) learning an updated N-layer deep convolutional transform corresponding to the plurality of LR image patches of the target modality, an updated N-layer deep convolutional transform corresponding to the plurality of HR image patches of the guidance modality, an updated non-convolutional fusing transform, an updated plurality of target features, and an updated plurality of guidance features, using a joint learning formulation for a Multi-modal Image Super-Resolution (MISR), wherein the joint learning formulation comprises updating the plurality of target features of the N-layer deep convolutional transform corresponding to the plurality of LR image patches of the target modality, the plurality of guidance features of the N-layer deep convolutional transform corresponding to the plurality of HR image patches of the guidance modality, the N-layer deep convolutional transform corresponding to the plurality of LR image patches of the target modality, the N-layer deep convolutional transform corresponding to the plurality of HR image patches of the guidance modality, and the non-convolutional fusing transform; and
(d) iteratively updating the N-layer deep convolutional transform corresponding to the plurality of LR image patches of the target modality, the N-layer deep convolutional transform corresponding to the plurality of HR image patches of the guidance modality, the non-convolutional fusing transform, the plurality of target features, and the plurality of guidance features, until convergence of an objective function of the joint learning formulation is achieved, to generate the trained DCTL model, wherein the convergence of the objective function is determined by identifying if difference in a value of the objective function of a current iteration and a previous iteration is less than an empirically determined threshold value.

10. The one or more non-transitory machine-readable information storage mediums as claimed in claim 9, wherein learning the updated N-layer deep convolutional transform corresponding to the plurality of LR image patches of the target modality, the updated N-layer deep convolutional transform corresponding to the plurality of HR image patches of the guidance modality, and the updated non-convolutional fusing transform, using the joint learning formulation for the MISR comprises:
(c.1) updating the plurality of target features of the N-layer deep convolutional transform corresponding to the plurality of LR image patches of the target modality, using
(c.1.1) the N-layer deep convolutional transform corresponding to the plurality of LR image patches of the target modality,
(c.1.2) the plurality of LR image patches of the target modality
(c.1.3) regularization of the plurality of target features to retain positive values of the plurality of target features, using a Rectified Linear Unit (ReLU) activation function,
(c.1.4) the non-convolutional fusing transform,
(c.1.5) the plurality of guidance features of the N-layer deep convolutional transform corresponding to the plurality of HR image patches of the guidance modality, and
(c.1.6) the plurality of HR image patches of the target modality;
(c.2) updating the plurality of guidance features of the N-layer deep convolutional transform corresponding to the plurality of HR image patches of the guidance modality, using
(c.2.1) the N-layer deep convolutional transform corresponding to the plurality of HR image patches of the guidance modality,
(c.2.2) the plurality of HR image patches of the guidance modality
(c.2.3) regularization of the plurality of guidance features to retain positive values of the plurality of guidance features, using the ReLU activation function, and
(c.2.4) the non-convolutional fusing transform,
(c.2.5) the plurality of target features of the N-layer deep convolutional transform corresponding to the plurality of LR image patches of the target modality, and
(c.2.6) the plurality of HR image patches of the target modality;
(c.3) updating the N-layer deep convolutional transform corresponding to the plurality of LR image patches of the target modality, using the plurality of LR image patches of the target modality, the plurality of updated target features, and a plurality of additional regularization terms to avoid one or more trivial and degenerate solutions and ensure that the learned N-layer deep convolutional transform corresponding to the plurality of the LR image patches of the target modality is unique, to generate the updated N-layer deep convolutional transform corresponding to the plurality of LR image patches of the target modality;
(c.4) updating the N-layer deep convolutional transform corresponding to the plurality of HR image patches of the guidance modality, using the plurality of HR image patches of the guidance modality, the plurality of updated guidance features, and the plurality of additional regularization terms to avoid the one or more trivial and degenerate solutions and ensure that the learned N-layer deep convolutional transform corresponding to the plurality of HR image patches of the guidance modality is unique, to generate the updated N-layer deep convolutional transform corresponding to the plurality of HR image patches of the guidance modality;
(c.5) flattening the plurality of target features and the plurality of guidance features, and concatenating the plurality of target features and the plurality of guidance features, to generate a plurality of concatenated features; and
(c.6) updating the non-convolutional fusing transform using the plurality of HR image patches of the target modality and the plurality of concatenated features.

11. The one or more non-transitory machine-readable information storage mediums as claimed in claim 9, wherein the plurality of target features comprises a low-frequency information of the target modality, and the plurality of guidance features comprises a high-frequency information of the target modality.

12. The one or more non-transitory machine-readable information storage mediums as claimed in claim 9, wherein the trained DCTL model comprising the learned N- layer deep convolutional transform corresponding to the plurality of LR image patches of the target modality, the learned N-layer deep convolutional transform corresponding to the plurality of HR image patches of the guidance modality, and the learned non-convolutional fusing transform, during inferencing stage, performs the MISR by:
(A) receiving a new LR image of the target modality, and a new HR image of the guidance modality;
(B) dividing the new LR image of the target modality, and the new HR image of the guidance modality, to generate a plurality of new LR image patches of the target modality, and a plurality of new HR images patches of the guidance modality;
(C) computing a plurality of new target features of the N-layer deep convolutional transform corresponding to the plurality of new LR image patches of the target modality, using the learned N-layer deep convolutional transform corresponding to the plurality of LR image patches of the target modality, and the plurality of new LR image patches of the target modality;
(D) computing a plurality of new guidance features of the N-layer deep convolutional transform corresponding to the plurality of new HR image patches of the guidance modality, using the learned N-layer deep convolutional transform corresponding to the plurality of HR image patches of the guidance modality, and the plurality of new HR image patches of the guidance modality;
(E) flattening and concatenating the plurality of new target features, and the plurality of new guidance features, to generate a plurality of new concatenated features;
(F) estimating a plurality of new HR image patches of the target modality using the learned non-convolutional fusing transform on the plurality of new concatenated features; and
(G) obtaining the new HR image of the target modality by combining the plurality of new HR image patches of the target modality.

## Patentansprüche

1. Prozessorimplementiertes Verfahren (300), wobei das Verfahren Folgendes umfasst:
Empfangen (302), über einen oder mehrere Hardwareprozessoren, einer Mehrzahl von Eingangsbildern, die Folgendes umfassen: (i) eine Mehrzahl von Bildern mit niedriger Auflösung, LR, einer Zielmodalität, (ii) eine Mehrzahl von Bildern mit hoher Auflösung, HR, einer Führungsmodalität und (iii) eine Mehrzahl von HR-Bildern der Zielmodalität;
Vorverarbeiten (304), über den einen oder die mehreren Hardwareprozessoren, der Mehrzahl von Eingangsbildern, um eine Mehrzahl von LR-Bildpatches der Zielmodalität, eine Mehrzahl von HR-Bildpatches der Führungsmodalität und eine Mehrzahl von HR-Bildpatches der Zielmodalität zu erzeugen; und
Trainieren (306), über den einen oder die mehreren Hardwareprozessoren, eines Deep Convolutional Transform Learning, DCTL, -Modells, um eine kreuzmodale Beziehung zwischen der Zielmodalität und der Führungsmodalität zu lernen, unter Verwendung (i) der Mehrzahl von LR-Bildpatches der Zielmodalität, (ii) der Mehrzahl von HR-Bildpatches der Führungsmodalität und (iii) der Mehrzahl von HR-Bildpatches der Zielmodalität, um ein trainiertes DCTL-Modell zu erzeugen, wobei das Trainieren des DCTL-Modells Folgendes umfasst:
(a) Initialisieren (306a) einer tiefen N-Schicht-Faltungstransformation, die der Mehrzahl von LR-Bildpatches der Zielmodalität entspricht, einer tiefen N-Schicht-Faltungstransformation, die der Mehrzahl von HR-Bildpatches der Führungsmodalität entspricht, und einer Nicht-Faltungsfusionstransformation;
(b) Initialisieren (306b) einer Mehrzahl von Zielmerkmalen, die der Mehrzahl von LR-Bildpatches der Zielmodalität entspricht, und einer Mehrzahl von Führungsmerkmalen, die der Mehrzahl von HR-Bildpatches der Führungsmodalität entspricht, mit einem Nullwert;
(c) Lernen (306c) einer aktualisierten tiefen N-Schicht-Faltungstransformation, die der Mehrzahl von LR-Bildpatches der Zielmodalität entspricht, einer aktualisierten tiefen N-Schicht-Faltungstransformation, die der Mehrzahl von HR-Bildpatches der Führungsmodalität entspricht, einer aktualisierten Nicht-Faltungsfusionstransformation, einer aktualisierten Mehrzahl von Zielmerkmalen und einer aktualisierten Mehrzahl von Führungsmerkmalen unter Verwendung einer gemeinsamen Lernformulierung für eine multimodale Bildsuperauflösung, MISR, wobei die gemeinsame Lernformulierung das Aktualisieren der Mehrzahl von Zielmerkmalen der tiefen N-Schicht-Faltungstransformation, die der Mehrzahl von LR-Bildpatches der Zielmodalität entspricht, der Mehrzahl von Führungsmerkmalen der tiefen N-Schicht-Faltungstransformation, die der Mehrzahl von HR-Bildpatches der Führungsmodalität entspricht, der tiefen N-Schicht-Faltungstransformation, die der Mehrzahl von LR-Bildpatches der Zielmodalität entspricht, der tiefen N-Schicht-Faltungstransformation, die der Mehrzahl von HR-Bildpatches der Führungsmodalität entspricht, und der Nicht-Faltungsfusionstransformation umfasst; und
(d) iteratives (306d) Aktualisieren der tiefen N-Schicht-Faltungstransformation, die der Mehrzahl von LR-Bildpatches der Zielmodalität entspricht, der tiefen N-Schicht-Faltungstransformation, die der Mehrzahl von HR-Bildpatches der Führungsmodalität entspricht, der Nicht-Faltungsfusionstransformation, der Mehrzahl von Zielmerkmalen und der Mehrzahl von Führungsmerkmalen, bis die Konvergenz einer Zielfunktion der gemeinsamen Lernformulierung erreicht ist, um das trainierte DCTL-Modell zu erzeugen, wobei die Konvergenz der Zielfunktion durch Identifizieren, ob die Differenz in einem Wert der Zielfunktion einer aktuellen Iteration und einer vorherigen Iteration kleiner als ein empirisch bestimmter Schwellenwert ist, bestimmt wird.

2. Prozessorimplementiertes Verfahren nach Anspruch 1, wobei das Lernen der aktualisierten tiefen N-Schicht-Faltungstransformation, die der Mehrzahl von LR-Bildpatches der Zielmodalität entspricht, der aktualisierten tiefen N-Schicht-Faltungstransformation, die der Mehrzahl von HR-Bildpatches der Führungsmodalität entspricht, und der aktualisierten Nicht-Faltungsfusionstransformation unter Verwendung der gemeinsamen Lernformulierung für die MISR Folgendes umfasst:
(c.1) Aktualisieren der Mehrzahl von Zielmerkmalen der tiefen N-Schicht-Faltungstransformation, die der Mehrzahl von LR-Bildpatches der Zielmodalität entspricht, unter Verwendung
(c.1.1) der tiefen N-Schicht-Faltungstransformation, die der Mehrzahl von LR-Bildpatches der Zielmodalität entspricht,
(c.1.2) der Mehrzahl von LR-Bildpatches der Zielmodalität
(c.1.3) Regularisierung der Mehrzahl von Zielmerkmalen, um positive Werte der Mehrzahl von Zielmerkmalen beizubehalten, unter Verwendung einer Aktivierungsfunktion der berichtigten linearen Einheit (ReLU),
(c.1.4) der Nicht-Faltungsfusionstransformation,
(c.1.5) der Mehrzahl von Führungsmerkmalen der tiefen N-Schicht-Faltungstransformation, die der Mehrzahl von HR-Bildpatches der Führungsmodalität entspricht, und
(c.1.6) der Mehrzahl von HR-Bildpatches der Zielmodalität;
(c.2) Aktualisieren der Mehrzahl von Führungsmerkmalen der tiefen N-Schicht-Faltungstransformation, die der Mehrzahl von HR-Bildpatches der Führungsmodalität entspricht, unter Verwendung
(c.2.1) der tiefen N-Schicht-Faltungstransformation, die der Mehrzahl von HR-Bildpatches der Führungsmodalität entspricht,
(c.2.2) der Mehrzahl von HR-Bildpatches der Führungsmodalität,
(c.2.3) Regularisierung der Mehrzahl von Führungsmerkmalen, um positive Werte der Mehrzahl von Führungsmerkmalen beizubehalten, unter Verwendung der ReLU-Aktivierungsfunktion, und
(c.2.4) der Nicht-Faltungsfusionstransformation,
(c.2.5) der Mehrzahl von Zielmerkmalen der tiefen N-Schicht-Faltungstransformation, die der Mehrzahl von LR-Bildpatches der Zielmodalität entspricht, und
(c.2.6) der Mehrzahl von HR-Bildpatches der Zielmodalität;
(c.3) Aktualisieren der tiefen N-Schicht-Faltungstransformation, die der Mehrzahl von LR-Bildpatches der Zielmodalität entspricht, unter Verwendung der Mehrzahl von LR-Bildpatches der Zielmodalität, der Mehrzahl von aktualisierten Zielmerkmalen und einer Mehrzahl von zusätzlichen Regularisierungstermen, um eine oder mehrere triviale und entartete Lösungen zu vermeiden und sicherzustellen, dass die erlernte tiefe N-Schicht-Faltungstransformation, die der Mehrzahl von LR-Bildpatches der Zielmodalität entspricht, eindeutig ist, um die aktualisierte tiefe N-Schicht-Faltungstransformation zu erzeugen, die der Mehrzahl von LR-Bildpatches der Zielmodalität entspricht;
(c.4) Aktualisieren der tiefen N-Schicht-Faltungstransformation, die der Mehrzahl von HR-Bildpatches der Führungsmodalität entspricht, unter Verwendung der Mehrzahl von HR-Bildpatches der Führungsmodalität, der Mehrzahl von aktualisierten Führungsmerkmalen und der Mehrzahl von zusätzlichen Regularisierungstermen, um die eine oder die mehreren trivialen und entarteten Lösungen zu vermeiden und sicherzustellen, dass die erlernte tiefe N-Schicht-Faltungstransformation, die der Mehrzahl von HR-Bildpatches der Führungsmodalität entspricht, eindeutig ist, um die aktualisierte tiefe N-Schicht-Faltungstransformation zu erzeugen, die der Mehrzahl von HR-Bildpatches der Führungsmodalität entspricht;
(c.5) Abflachen der Mehrzahl von Zielmerkmalen und der Mehrzahl von Führungsmerkmalen und Verketten der Mehrzahl von Zielmerkmalen und der Mehrzahl von Führungsmerkmalen, um eine Mehrzahl von verketteten Merkmalen zu erzeugen; und
(c.6) Aktualisieren der Nicht-Faltungsfusionstransformation unter Verwendung der Mehrzahl von HR-Bildpatches der Zielmodalität und der Mehrzahl von verketteten Merkmalen.

3. Prozessorimplementiertes Verfahren nach Anspruch 1, wobei die Mehrzahl von Zielmerkmalen eine Niederfrequenzinformation der Zielmodalität umfasst und die Mehrzahl von Führungsmerkmalen eine Hochfrequenzinformation der Zielmodalität umfasst.

4. Prozessorimplementiertes Verfahren nach Anspruch 1, wobei das trainierte DCTL-Modell, das die erlernte tiefe N-Schicht-Faltungstransformation, die der Mehrzahl von LR-Bildpatches der Zielmodalität entspricht, die erlernte tiefe N-Schicht-Faltungstransformation, die der Mehrzahl von HR-Bildpatches der Führungsmodalität entspricht, und die erlernte Nicht-Faltungsfusionstransformation umfasst, während der Inferenzstufe die MISR durch Folgendes durchführt:
(A) Empfangen eines neuen LR-Bildes der Zielmodalität und eines neuen HR-Bildes der Führungsmodalität;
(B) Teilen des neuen LR-Bildes der Zielmodalität und des neuen HR-Bildes der Führungsmodalität, um eine Mehrzahl von neuen LR-Bildpatches der Zielmodalität und eine Mehrzahl von neuen HR-Bildpatches der Führungsmodalität zu erzeugen;
(C) Berechnen einer Mehrzahl von neuen Zielmerkmalen der tiefen N-Schicht-Faltungstransformation, die der Mehrzahl von neuen LR-Bildpatches der Zielmodalität entspricht, unter Verwendung der erlernten tiefen N-Schicht-Faltungstransformation, die der Mehrzahl von LR-Bildpatches der Zielmodalität entspricht, und der Mehrzahl von neuen LR-Bildpatches der Zielmodalität;
(D) Berechnen einer Mehrzahl von neuen Führungsmerkmalen der tiefen N-Schicht-Faltungstransformation, die der Mehrzahl von neuen HR-Bildpatches der Führungsmodalität entspricht, unter Verwendung der erlernten tiefen N-Schicht-Faltungstransformation, die der Mehrzahl von HR-Bildpatches der Führungsmodalität entspricht, und der Mehrzahl von neuen HR-Bildpatches der Führungsmodalität;
(E) Abflachen und Verketten der Mehrzahl von neuen Zielmerkmalen und der Mehrzahl von neuen Führungsmerkmalen, um eine Mehrzahl von neuen verketteten Merkmalen zu erzeugen;
(F) Schätzen einer Mehrzahl von neuen HR-Bildpatches der Zielmodalität unter Verwendung der erlernten Nicht-Faltungsfusionstransformation an der Mehrzahl von neuen verketteten Merkmalen; und
(G) Erhalten des neuen HR-Bildes der Zielmodalität durch Kombinieren der Mehrzahl von neuen HR-Bildpatches der Zielmodalität.

5. System (100), umfassend:
einen Speicher (102), der Anweisungen speichert;
eine oder mehrere Kommunikationsschnittstellen (106); und
einen oder mehrere Hardwareprozessoren (104), die mit dem Speicher (102) über die eine oder die mehreren Kommunikationsschnittstellen (106) gekoppelt sind, wobei der eine oder die mehreren Hardwareprozessoren (104) durch die Anweisungen konfiguriert sind zum:
Empfangen einer Mehrzahl von Eingangsbildern, die Folgendes umfassen: (i) eine Mehrzahl von Bildern mit niedriger Auflösung, LR, einer Zielmodalität, (ii) eine Mehrzahl von Bildern mit hoher Auflösung, HR, einer Führungsmodalität und (iii) eine Mehrzahl von HR-Bildern der Zielmodalität;
Vorverarbeiten der Mehrzahl von Eingangsbildern, um eine Mehrzahl von LR-Bildpatches der Zielmodalität, eine Mehrzahl von HR-Bildpatches der Führungsmodalität und (iii) eine Mehrzahl von HR-Bildpatches der Zielmodalität zu erzeugen; und
Trainieren eines Deep Convolutional Transform Learning, DCTL, -Modells, um eine kreuzmodale Beziehung zwischen der Zielmodalität und der Führungsmodalität zu lernen, unter Verwendung (i) der Mehrzahl von LR-Bildpatches der Zielmodalität, (ii) der Mehrzahl von HR-Bildpatches der Führungsmodalität und (iii) der Mehrzahl von HR-Bildpatches der Zielmodalität, um ein trainiertes DCTL-Modell zu erzeugen, wobei das Trainieren des DCTL Folgendes umfasst:
(a) Initialisieren einer tiefen N-Schicht-Faltungstransformation, die der Mehrzahl von LR-Bildpatches der Zielmodalität entspricht, einer tiefen N-Schicht-Faltungstransformation, die der Mehrzahl von HR-Bildpatches der Führungsmodalität entspricht, und einer Nicht-Faltungsfusionstransformation;
(b) Initialisieren einer Mehrzahl von Zielmerkmalen, die der Mehrzahl von LR-Bildpatches der Zielmodalität entspricht, und einer Mehrzahl von Führungsmerkmalen, die der Mehrzahl von HR-Bildpatches der Führungsmodalität entspricht, mit einem Nullwert;
(c) Lernen einer aktualisierten tiefen N-Schicht-Faltungstransformation, die der Mehrzahl von LR-Bildpatches der Zielmodalität entspricht, einer aktualisierten tiefen N-Schicht-Faltungstransformation, die der Mehrzahl von HR-Bildpatches der Führungsmodalität entspricht, einer aktualisierten Nicht-Faltungsfusionstransformation, einer aktualisierten Mehrzahl von Zielmerkmalen und einer aktualisierten Mehrzahl von Führungsmerkmalen unter Verwendung einer gemeinsamen Lernformulierung für eine multimodale Bildsuperauflösung (MISR), wobei die gemeinsame Lernformulierung das Aktualisieren der Mehrzahl von Zielmerkmalen der tiefen N-Schicht-Faltungstransformation, die der Mehrzahl von LR-Bildpatches der Zielmodalität entspricht, der Mehrzahl von Führungsmerkmalen der tiefen N-Schicht-Faltungstransformation, die der Mehrzahl von HR-Bildpatches der Führungsmodalität entspricht, der tiefen N-Schicht-Faltungstransformation, die der Mehrzahl von LR-Bildpatches der Zielmodalität entspricht, der tiefen N-Schicht-Faltungstransformation, die der Mehrzahl von HR-Bildpatches der Führungsmodalität entspricht, und der Nicht-Faltungsfusionstransformation umfasst; und
(d) iteratives Aktualisieren der tiefen N-Schicht-Faltungstransformation, die der Mehrzahl von LR-Bildpatches der Zielmodalität entspricht, der tiefen N-Schicht-Faltungstransformation, die der Mehrzahl von HR-Bildpatches der Führungsmodalität entspricht, der Nicht-Faltungsfusionstransformation, der Mehrzahl von Zielmerkmalen und der Mehrzahl von Führungsmerkmalen, bis die Konvergenz einer Zielfunktion der gemeinsamen Lernformulierung erreicht ist, um das trainierte DCTL-Modell zu erzeugen, wobei die Konvergenz der Zielfunktion durch Identifizieren, ob die Differenz in einem Wert der Zielfunktion einer aktuellen Iteration und einer vorherigen Iteration kleiner als ein empirisch bestimmter Schwellenwert ist, bestimmt wird.

6. System nach Anspruch 5, wobei das Lernen der aktualisierten tiefen N-Schicht-Faltungstransformation, die der Mehrzahl von LR-Bildpatches der Zielmodalität entspricht, der aktualisierten tiefen N-Schicht-Faltungstransformation, die der Mehrzahl von HR-Bildpatches der Führungsmodalität entspricht, und der aktualisierten Nicht-Faltungsfusionstransformation unter Verwendung der gemeinsamen Lernformulierung für die MISR Folgendes umfasst:
(c.1) Aktualisieren der Mehrzahl von Zielmerkmalen der tiefen N-Schicht-Faltungstransformation, die der Mehrzahl von LR-Bildpatches der Zielmodalität entspricht, unter Verwendung
(c.1.1) der tiefen N-Schicht-Faltungstransformation, die der Mehrzahl von LR-Bildpatches der Zielmodalität entspricht,
(c.1.2) der Mehrzahl von LR-Bildpatches der Zielmodalität
(c.1.3) Regularisierung der Mehrzahl von Zielmerkmalen, um positive Werte der Mehrzahl von Zielmerkmalen beizubehalten, unter Verwendung einer Aktivierungsfunktion der berichtigten linearen Einheit (ReLU),
(c.1.4) der Nicht-Faltungsfusionstransformation,
(c.1.5) der Mehrzahl von Führungsmerkmalen der tiefen N-Schicht-Faltungstransformation, die der Mehrzahl von HR-Bildpatches der Führungsmodalität entspricht, und
(c.1.6) der Mehrzahl von HR-Bildpatches der Zielmodalität;
(c.2) Aktualisieren der Mehrzahl von Führungsmerkmalen der tiefen N-Schicht-Faltungstransformation, die der Mehrzahl von HR-Bildpatches der Führungsmodalität entspricht, unter Verwendung
(c.2.1) der tiefen N-Schicht-Faltungstransformation, die der Mehrzahl von HR-Bildpatches der Führungsmodalität entspricht,
(c.2.2) der Mehrzahl von HR-Bildpatches der Führungsmodalität,
(c.2.3) Regularisierung der Mehrzahl von Führungsmerkmalen, um positive Werte der Mehrzahl von Führungsmerkmalen beizubehalten, unter Verwendung der ReLU-Aktivierungsfunktion, und
(c.2.4) der Nicht-Faltungsfusionstransformation,
(c.2.5) der Mehrzahl von Zielmerkmalen der tiefen N-Schicht-Faltungstransformation, die der Mehrzahl von LR-Bildpatches der Zielmodalität entspricht, und
(c.2.6) der Mehrzahl von HR-Bildpatches der Zielmodalität;
(c.3) Aktualisieren der tiefen N-Schicht-Faltungstransformation, die der Mehrzahl von LR-Bildpatches der Zielmodalität entspricht, unter Verwendung der Mehrzahl von LR-Bildpatches der Zielmodalität, der Mehrzahl von aktualisierten Zielmerkmalen und einer Mehrzahl von zusätzlichen Regularisierungstermen, um eine oder mehrere triviale und entartete Lösungen zu vermeiden und sicherzustellen, dass die erlernte tiefe N-Schicht-Faltungstransformation, die der Mehrzahl von LR-Bildpatches der Zielmodalität entspricht, eindeutig ist, um die aktualisierte tiefe N-Schicht-Faltungstransformation zu erzeugen, die der Mehrzahl von LR-Bildpatches der Zielmodalität entspricht;
(c.4) Aktualisieren der tiefen N-Schicht-Faltungstransformation, die der Mehrzahl von HR-Bildpatches der Führungsmodalität entspricht, unter Verwendung der Mehrzahl von HR-Bildpatches der Führungsmodalität, der Mehrzahl von aktualisierten Führungsmerkmalen und der Mehrzahl von zusätzlichen Regularisierungstermen, um die eine oder die mehreren trivialen und entarteten Lösungen zu vermeiden und sicherzustellen, dass die erlernte tiefe N-Schicht-Faltungstransformation, die der Mehrzahl von HR-Bildpatches der Führungsmodalität entspricht, eindeutig ist, um die aktualisierte tiefe N-Schicht-Faltungstransformation zu erzeugen, die der Mehrzahl von HR-Bildpatches der Führungsmodalität entspricht;
(c.5) Abflachen der Mehrzahl von Zielmerkmalen und der Mehrzahl von Führungsmerkmalen und Verketten der Mehrzahl von Zielmerkmalen und der Mehrzahl von Führungsmerkmalen, um eine Mehrzahl von verketteten Merkmalen zu erzeugen; und
(c.6) Aktualisieren der Nicht-Faltungsfusionstransformation unter Verwendung der Mehrzahl von HR-Bildpatches der Zielmodalität und der Mehrzahl von verketteten Merkmalen.

7. System nach Anspruch 5, prozessorimplementiertes Verfahren nach Anspruch 1, wobei die Mehrzahl von Zielmerkmalen eine Niederfrequenzinformation der Zielmodalität umfasst und die Mehrzahl von Führungsmerkmalen eine Hochfrequenzinformation der Zielmodalität umfasst.

8. System nach Anspruch 5, wobei das trainierte DCTL-Modell, das die erlernte tiefe N-Schicht-Faltungstransformation, die der Mehrzahl von LR-Bildpatches der Zielmodalität entspricht, die erlernte tiefe N-Schicht-Faltungstransformation, die der Mehrzahl von HR-Bildpatches der Führungsmodalität entspricht, und die erlernte Nicht-Faltungsfusionstransformation umfasst, während der Inferenzstufe die MISR durch Folgendes durchführt:
(A) Empfangen eines neuen LR-Bildes der Zielmodalität und eines neuen HR-Bildes der Führungsmodalität;
(B) Teilen des neuen LR-Bildes der Zielmodalität und des neuen HR-Bildes der Führungsmodalität, um eine Mehrzahl von neuen LR-Bildpatches der Zielmodalität und eine Mehrzahl von neuen HR-Bildpatches der Führungsmodalität zu erzeugen;
(C) Berechnen einer Mehrzahl von neuen Zielmerkmalen der tiefen N-Schicht-Faltungstransformation, die der Mehrzahl von neuen LR-Bildpatches der Zielmodalität entspricht, unter Verwendung der erlernten tiefen N-Schicht-Faltungstransformation, die der Mehrzahl von LR-Bildpatches der Zielmodalität entspricht, und der Mehrzahl von neuen LR-Bildpatches der Zielmodalität;
(D) Berechnen einer Mehrzahl von neuen Führungsmerkmalen der tiefen N-Schicht-Faltungstransformation, die der Mehrzahl von neuen HR-Bildpatches der Führungsmodalität entspricht, unter Verwendung der erlernten tiefen N-Schicht-Faltungstransformation, die der Mehrzahl von HR-Bildpatches der Führungsmodalität entspricht, und der Mehrzahl von neuen HR-Bildpatches der Führungsmodalität;
(E) Abflachen und Verketten der Mehrzahl von neuen Zielmerkmalen und der Mehrzahl von neuen Führungsmerkmalen, um eine Mehrzahl von neuen verketteten Merkmalen zu erzeugen;
(F) Schätzen einer Mehrzahl von neuen HR-Bildpatches der Zielmodalität unter Verwendung der erlernten Nicht-Faltungsfusionstransformation an der Mehrzahl von neuen verketteten Merkmalen; und
(G) Erhalten des neuen HR-Bildes der Zielmodalität durch Kombinieren der Mehrzahl von neuen HR-Bildpatches der Zielmodalität.

9. Ein oder mehrere nichtflüchtige maschinenlesbare Informationsspeichermedien, die eine oder mehrere Anweisungen umfassen, die bei Ausführung durch einen oder mehrere Hardwareprozessoren Folgendes bewirken:
Empfangen einer Mehrzahl von Eingangsbildern, die Folgendes umfassen: (i) eine Mehrzahl von Bildern mit niedriger Auflösung, LR, einer Zielmodalität, (ii) eine Mehrzahl von Bildern mit hoher Auflösung, HR, einer Führungsmodalität und (iii) eine Mehrzahl von HR-Bildern der Zielmodalität;
Vorverarbeiten der Mehrzahl von Eingangsbildern, um eine Mehrzahl von LR-Bildpatches der Zielmodalität, eine Mehrzahl von HR-Bildpatches der Führungsmodalität und eine Mehrzahl von HR-Bildpatches der Zielmodalität zu erzeugen; und
Trainieren eines Deep Convolutional Transform Learning, DCTL, - Modells, um eine kreuzmodale Beziehung zwischen der Zielmodalität und der Führungsmodalität zu lernen, unter Verwendung (i) der Mehrzahl von LR-Bildpatches der Zielmodalität, (ii) der Mehrzahl von HR-Bildpatches der Führungsmodalität und (iii) der Mehrzahl von HR-Bildpatches der Zielmodalität, um ein trainiertes DCTL-Modell zu erzeugen, wobei das Trainieren des DCTL-Modells Folgendes umfasst:
(a) Initialisieren einer tiefen N-Schicht-Faltungstransformation, die der Mehrzahl von LR-Bildpatches der Zielmodalität entspricht, einer tiefen N-Schicht-Faltungstransformation, die der Mehrzahl von HR-Bildpatches der Führungsmodalität entspricht, und einer Nicht-Faltungsfusionstransformation;
(b) Initialisieren einer Mehrzahl von Zielmerkmalen, die der Mehrzahl von LR-Bildpatches der Zielmodalität entspricht, und einer Mehrzahl von Führungsmerkmalen, die der Mehrzahl von HR-Bildpatches der Führungsmodalität entspricht, mit einem Nullwert;
(c) Lernen einer aktualisierten tiefen N-Schicht-Faltungstransformation, die der Mehrzahl von LR-Bildpatches der Zielmodalität entspricht, einer aktualisierten tiefen N-Schicht-Faltungstransformation, die der Mehrzahl von HR-Bildpatches der Führungsmodalität entspricht, einer aktualisierten Nicht-Faltungsfusionstransformation, einer aktualisierten Mehrzahl von Zielmerkmalen und einer aktualisierten Mehrzahl von Führungsmerkmalen unter Verwendung einer gemeinsamen Lernformulierung für eine multimodale Bildsuperauflösung (MISR), wobei die gemeinsame Lernformulierung das Aktualisieren der Mehrzahl von Zielmerkmalen der tiefen N-Schicht-Faltungstransformation, die der Mehrzahl von LR-Bildpatches der Zielmodalität entspricht, der Mehrzahl von Führungsmerkmalen der tiefen N-Schicht-Faltungstransformation, die der Mehrzahl von HR-Bildpatches der Führungsmodalität entspricht, der tiefen N-Schicht-Faltungstransformation, die der Mehrzahl von LR-Bildpatches der Zielmodalität entspricht, der tiefen N-Schicht-Faltungstransformation, die der Mehrzahl von HR-Bildpatches der Führungsmodalität entspricht, und der Nicht-Faltungsfusionstransformation umfasst; und
(d) iteratives Aktualisieren der tiefen N-Schicht-Faltungstransformation, die der Mehrzahl von LR-Bildpatches der Zielmodalität entspricht, der tiefen N-Schicht-Faltungstransformation, die der Mehrzahl von HR-Bildpatches der Führungsmodalität entspricht, der Nicht-Faltungsfusionstransformation, der Mehrzahl von Zielmerkmalen und der Mehrzahl von Führungsmerkmalen, bis die Konvergenz einer Zielfunktion der gemeinsamen Lernformulierung erreicht ist, um das trainierte DCTL-Modell zu erzeugen, wobei die Konvergenz der Zielfunktion durch Identifizieren, ob die Differenz in einem Wert der Zielfunktion einer aktuellen Iteration und einer vorherigen Iteration kleiner als ein empirisch bestimmter Schwellenwert ist, bestimmt wird.

10. Ein oder mehrere nichtflüchtige maschinenlesbare Informationsspeichermedien nach Anspruch 9, wobei das Lernen der aktualisierten tiefen N-Schicht-Faltungstransformation, die der Mehrzahl von LR-Bildpatches der Zielmodalität entspricht, der aktualisierten tiefen N-Schicht-Faltungstransformation, die der Mehrzahl von HR-Bildpatches der Führungsmodalität entspricht, und der aktualisierten Nicht-Faltungsfusionstransformation unter Verwendung der gemeinsamen Lernformulierung für die MISR Folgendes umfasst:
(c.1) Aktualisieren der Mehrzahl von Zielmerkmalen der tiefen N-Schicht-Faltungstransformation, die der Mehrzahl von LR-Bildpatches der Zielmodalität entspricht, unter Verwendung
(c.1.1) der tiefen N-Schicht-Faltungstransformation, die der Mehrzahl von LR-Bildpatches der Zielmodalität entspricht,
(c.1.2) der Mehrzahl von LR-Bildpatches der Zielmodalität
(c.1.3) Regularisierung der Mehrzahl von Zielmerkmalen, um positive Werte der Mehrzahl von Zielmerkmalen beizubehalten, unter Verwendung einer Aktivierungsfunktion der berichtigten linearen Einheit (ReLU),
(c.1.4) der Nicht-Faltungsfusionstransformation,
(c.1.5) der Mehrzahl von Führungsmerkmalen der tiefen N-Schicht-Faltungstransformation, die der Mehrzahl von HR-Bildpatches der Führungsmodalität entspricht, und
(c.1.6) der Mehrzahl von HR-Bildpatches der Zielmodalität;
(c.2) Aktualisieren der Mehrzahl von Führungsmerkmalen der tiefen N-Schicht-Faltungstransformation, die der Mehrzahl von HR-Bildpatches der Führungsmodalität entspricht, unter Verwendung
(c.2.1) der tiefen N-Schicht-Faltungstransformation, die der Mehrzahl von HR-Bildpatches der Führungsmodalität entspricht,
(c.2.2) der Mehrzahl von HR-Bildpatches der Führungsmodalität,
(c.2.3) Regularisierung der Mehrzahl von Führungsmerkmalen, um positive Werte der Mehrzahl von Führungsmerkmalen beizubehalten, unter Verwendung der ReLU-Aktivierungsfunktion, und
(c.2.4) der Nicht-Faltungsfusionstransformation,
(c.2.5) der Mehrzahl von Zielmerkmalen der tiefen N-Schicht-Faltungstransformation, die der Mehrzahl von LR-Bildpatches der Zielmodalität entspricht, und
(c.2.6) der Mehrzahl von HR-Bildpatches der Zielmodalität;
(c.3) Aktualisieren der tiefen N-Schicht-Faltungstransformation, die der Mehrzahl von LR-Bildpatches der Zielmodalität entspricht, unter Verwendung der Mehrzahl von LR-Bildpatches der Zielmodalität, der Mehrzahl von aktualisierten Zielmerkmalen und einer Mehrzahl von zusätzlichen Regularisierungstermen, um eine oder mehrere triviale und entartete Lösungen zu vermeiden und sicherzustellen, dass die erlernte tiefe N-Schicht-Faltungstransformation, die der Mehrzahl von LR-Bildpatches der Zielmodalität entspricht, eindeutig ist, um die aktualisierte tiefe N-Schicht-Faltungstransformation zu erzeugen, die der Mehrzahl von LR-Bildpatches der Zielmodalität entspricht;
(c.4) Aktualisieren der tiefen N-Schicht-Faltungstransformation, die der Mehrzahl von HR-Bildpatches der Führungsmodalität entspricht, unter Verwendung der Mehrzahl von HR-Bildpatches der Führungsmodalität, der Mehrzahl von aktualisierten Führungsmerkmalen und der Mehrzahl von zusätzlichen Regularisierungstermen, um die eine oder die mehreren trivialen und entarteten Lösungen zu vermeiden und sicherzustellen, dass die erlernte tiefe N-Schicht-Faltungstransformation, die der Mehrzahl von HR-Bildpatches der Führungsmodalität entspricht, eindeutig ist, um die aktualisierte tiefe N-Schicht-Faltungstransformation zu erzeugen, die der Mehrzahl von HR-Bildpatches der Führungsmodalität entspricht;
(c.5) Abflachen der Mehrzahl von Zielmerkmalen und der Mehrzahl von Führungsmerkmalen und Verketten der Mehrzahl von Zielmerkmalen und der Mehrzahl von Führungsmerkmalen, um eine Mehrzahl von verketteten Merkmalen zu erzeugen; und
(c.6) Aktualisieren der Nicht-Faltungsfusionstransformation unter Verwendung der Mehrzahl von HR-Bildpatches der Zielmodalität und der Mehrzahl von verketteten Merkmalen.

11. Ein oder mehrere nichtflüchtige maschinenlesbare Informationsspeichermedien nach Anspruch 9, wobei die Mehrzahl von Zielmerkmalen eine Niederfrequenzinformation der Zielmodalität umfasst und die Mehrzahl von Führungsmerkmalen eine Hochfrequenzinformation der Zielmodalität umfasst.

12. Ein oder mehrere nichtflüchtige maschinenlesbare Informationsspeichermedien nach Anspruch 9, wobei das trainierte DCTL-Modell, das die erlernte tiefe N-Schicht-Faltungstransformation, die der Mehrzahl von LR-Bildpatches der Zielmodalität entspricht, die erlernte tiefe N-Schicht-Faltungstransformation, die der Mehrzahl von HR-Bildpatches der Führungsmodalität entspricht, und die erlernte Nicht-Faltungsfusionstransformation umfasst, während der Inferenzstufe die MISR durch Folgendes durchführt:
(A) Empfangen eines neuen LR-Bildes der Zielmodalität und eines neuen HR-Bildes der Führungsmodalität;
(B) Teilen des neuen LR-Bildes der Zielmodalität und des neuen HR-Bildes der Führungsmodalität, um eine Mehrzahl von neuen LR-Bildpatches der Zielmodalität und eine Mehrzahl von neuen HR-Bildpatches der Führungsmodalität zu erzeugen;
(C) Berechnen einer Mehrzahl von neuen Zielmerkmalen der tiefen N-Schicht-Faltungstransformation, die der Mehrzahl von neuen LR-Bildpatches der Zielmodalität entspricht, unter Verwendung der erlernten tiefen N-Schicht-Faltungstransformation, die der Mehrzahl von LR-Bildpatches der Zielmodalität entspricht, und der Mehrzahl von neuen LR-Bildpatches der Zielmodalität;
(D) Berechnen einer Mehrzahl von neuen Führungsmerkmalen der tiefen N-Schicht-Faltungstransformation, die der Mehrzahl von neuen HR-Bildpatches der Führungsmodalität entspricht, unter Verwendung der erlernten tiefen N-Schicht-Faltungstransformation, die der Mehrzahl von HR-Bildpatches der Führungsmodalität entspricht, und der Mehrzahl von neuen HR-Bildpatches der Führungsmodalität;
(E) Abflachen und Verketten der Mehrzahl von neuen Zielmerkmalen und der Mehrzahl von neuen Führungsmerkmalen, um eine Mehrzahl von neuen verketteten Merkmalen zu erzeugen;
(F) Schätzen einer Mehrzahl von neuen HR-Bildpatches der Zielmodalität unter Verwendung der erlernten Nicht-Faltungsfusionstransformation an der Mehrzahl von neuen verketteten Merkmalen; und
(G) Erhalten des neuen HR-Bildes der Zielmodalität durch Kombinieren der Mehrzahl von neuen HR-Bildpatches der Zielmodalität.

## Revendications

1. Procédé mis en œuvre par processeur (300), le procédé comprenant :
la réception (302), via un ou plusieurs processeurs matériels, d'une pluralité d'images d'entrée comprenant (i) une pluralité d'images à faible résolution, LR, d'une modalité cible, (ii) une pluralité d'images à haute résolution, HR, d'une modalité de guidage, et (iii) une pluralité d'images HR de la modalité cible ;
le prétraitement (304), via les un ou plusieurs processeurs matériels, de la pluralité d'images d'entrée, pour générer une pluralité de zones d'image LR de la modalité cible, une pluralité de zones d'image HR de la modalité de guidage, et une pluralité de zones d'image HR de la modalité cible ; et
l'entraînement (306), via les un ou plusieurs processeurs matériels, d'un modèle d'entraînement de transformée convolutive profonde, DCTL, pour apprendre une relation intermodale entre la modalité cible et la modalité de guidage, en utilisant (i) la pluralité de zones d'image LR de la modalité cible, (ii) la pluralité de zones d'image HR de la modalité de guidage, et (iii) la pluralité de zones d'image HR de la modalité cible, pour générer un modèle DCTL entraîné, dans lequel l'entraînement du modèle DCTL comprend :
(a) l'initialisation (306a) d'une transformée convolutive profonde à N couches correspondant à la pluralité de zones d'image LR de la modalité cible, d'une transformée convolutive profonde à N couches correspondant à la pluralité de zones d'image HR de la modalité de guidage, et d'une transformée de fusion non convolutive ;
(b) l'initialisation (306b) d'une pluralité de caractéristiques cibles correspondant à la pluralité de zones d'image LR de la modalité cible, et d'une pluralité de caractéristiques de guidage correspondant à la pluralité de zones d'image HR de la modalité de guidage avec une valeur nulle ;
(c) l'entraînement (306c) d'une transformée convolutive profonde à N couches mise à jour correspondant à la pluralité de zones d'image LR de la modalité cible, d'une transformée convolutive profonde à N couches mise à jour correspondant à la pluralité de zones d'image HR de la modalité de guidage, d'une transformée de fusion non convolutive mise à jour, d'une pluralité mise à jour de caractéristiques cibles, et d'une pluralité mise à jour de caractéristiques de guidage, en utilisant une formulation d'entraînement conjointe pour une super-résolution d'image multimodale, MISR, dans lequel la formulation d'entraînement conjointe comprend la mise à jour de la pluralité de caractéristiques cibles de la transformée convolutive profonde à N couches correspondant à la pluralité de zones d'image LR de la modalité cible, de la pluralité de caractéristiques de guidage de la transformée convolutive profonde à N couches correspondant à la pluralité de zones d'image HR de la modalité de guidage, de la transformée convolutive profonde à N couches correspondant à la pluralité de zones d'image LR de la modalité cible, de la transformée convolutive profonde à N couches correspondant à la pluralité de zones d'image HR de la modalité de guidage, et de la transformée de fusion non convolutive ; et
(d) la mise à jour itérative (306d) de la transformée convolutive profonde à N couches correspondant à la pluralité de zones d'image LR de la modalité cible, de la transformée convolutive profonde à N couches correspondant à la pluralité de zones d'image HR de la modalité de guidage, de la transformée de fusion non convolutive, de la pluralité de caractéristiques cibles, et de la pluralité de caractéristiques de guidage, jusqu'à ce qu'une convergence d'une fonction objectif de la formulation d'entraînement conjointe soit obtenue, pour générer le modèle DCTL entraîné, dans lequel la convergence de la fonction objectif est déterminée en identifiant si une différence dans une valeur de la fonction objectif d'une itération actuelle et d'une itération précédente est inférieure à une valeur seuil déterminée empiriquement.

2. Procédé mis en œuvre par processeur selon la revendication 1, dans lequel l'entraînement de la transformée convolutive profonde à N couches mise à jour correspondant à la pluralité de zones d'image LR de la modalité cible, de la transformée convolutive profonde à N couches mise à jour correspondant à la pluralité de zones d'image HR de la modalité de guidage, et de la transformée de fusion non convolutive mise à jour, en utilisant la formulation d'entraînement conjointe pour la MISR comprend :
(c.1) la mise à jour de la pluralité de caractéristiques cibles de la transformée convolutive profonde à N couches correspondant à la pluralité de zones d'image LR de la modalité cible, en utilisant
(c.1.1) la transformée convolutive profonde à N couches correspondant à la pluralité de zones d'image LR de la modalité cible,
(c.1.2) la pluralité de zones d'image LR de la modalité cible,
(c.1.3) la régularisation de la pluralité de caractéristiques cibles pour conserver des valeurs positives de la pluralité de caractéristiques cibles, en utilisant une fonction d'activation d'unité linéaire rectifiée (ReLU),
(c.1.4) la transformée de fusion non convolutive,
(c.1.5) la pluralité de caractéristiques de guidage de la transformée convolutive profonde à N couches correspondant à la pluralité de zones d'image HR de la modalité de guidage, et
(c.1.6) la pluralité de zones d'image HR de la modalité cible ;
(c.2) la mise à jour de la pluralité de caractéristiques de guidage de la transformée convolutive profonde à N couches correspondant à la pluralité de zones d'image HR de la modalité de guidage, en utilisant
(c.2.1) la transformée convolutive profonde à N couches correspondant à la pluralité de zones d'image HR de la modalité de guidage,
(c.2.2) la pluralité de zones d'image HR de la modalité de guidage,
(c.2.3) la régularisation de la pluralité de caractéristiques de guidage pour conserver des valeurs positives de la pluralité de caractéristiques de guidage, en utilisant la fonction d'activation ReLU, et
(c.2.4) la transformée de fusion non convolutive,
(c.2.5) la pluralité de caractéristiques cibles de la transformée convolutive profonde à N couches correspondant à la pluralité de zones d'image LR de la modalité cible, et
(c.2.6) la pluralité de zones d'image HR de la modalité cible ;
(c.3) la mise à jour de la transformée convolutive profonde à N couches correspondant à la pluralité de zones d'image LR de la modalité cible, en utilisant la pluralité de zones d'image LR de la modalité cible, la pluralité de caractéristiques cibles mises à jour, et une pluralité de termes de régularisation supplémentaires pour éviter une ou plusieurs solutions triviales et dégénérées et garantir que la transformée convolutive profonde à N couches apprise correspondant à la pluralité de zones d'image LR de la modalité cible est unique, pour générer la transformée convolutive profonde à N couches mise à jour correspondant à la pluralité de zones d'image LR de la modalité cible ;
(c.4) la mise à jour de la transformée convolutive profonde à N couches correspondant à la pluralité de zones d'image HR de la modalité de guidage, en utilisant la pluralité de zones d'image HR de la modalité de guidage, la pluralité de caractéristiques de guidage mises à jour, et la pluralité de termes de régularisation supplémentaires pour éviter les une ou plusieurs solutions triviales et dégénérées et garantir que la transformée convolutive profonde à N couches apprise correspondant à la pluralité de zones d'image HR de la modalité de guidage est unique, pour générer la transformée convolutive profonde à N couches mise à jour correspondant à la pluralité de zones d'image HR de la modalité de guidage ;
(c.5) l'aplatissement de la pluralité de caractéristiques cibles et de la pluralité de caractéristiques de guidage, et la concaténation de la pluralité de caractéristiques cibles et de la pluralité de caractéristiques de guidage, pour générer une pluralité de caractéristiques concaténées ; et
(c.6) la mise à jour de la transformée de fusion non convolutive en utilisant la pluralité de zones d'image HR de la modalité cible et la pluralité de caractéristiques concaténées.

3. Procédé mis en œuvre par processeur selon la revendication 1, dans lequel la pluralité de caractéristiques cibles comprend une information à basse fréquence de la modalité cible, et la pluralité de caractéristiques de guidage comprend une information à haute fréquence de la modalité cible.

4. Procédé mis en œuvre par processeur selon la revendication 1, dans lequel le modèle DCTL entraîné comprenant la transformée convolutive profonde à N couches apprise correspondant à la pluralité de zones d'image LR de la modalité cible, la transformée convolutive profonde à N couches apprise correspondant à la pluralité de zones d'image HR de la modalité de guidage, et la transformée de fusion non convolutive apprise, pendant l'étape d'inférence, effectue la MISR par :
(A) la réception d'une nouvelle image LR de la modalité cible, et d'une nouvelle image HR de la modalité de guidage ;
(B) la division de la nouvelle image LR de la modalité cible, et de la nouvelle image HR de la modalité de guidage, pour générer une pluralité de nouvelles zones d'image LR de la modalité cible, et une pluralité de nouvelles zones d'image HR de la modalité de guidage ;
(C) le calcul d'une pluralité de nouvelles caractéristiques cibles de la transformée convolutive profonde à N couches correspondant à la pluralité de nouvelles zones d'image LR de la modalité cible, en utilisant la transformée convolutive profonde à N couches apprise correspondant à la pluralité de zones d'image LR de la modalité cible, et la pluralité de nouvelles zones d'image LR de la modalité cible ;
(D) le calcul d'une pluralité de nouvelles caractéristiques de guidage de la transformée convolutive profonde à N couches correspondant à la pluralité de nouvelles zones d'image HR de la modalité de guidage, en utilisant la transformée convolutive profonde à N couches apprise correspondant à la pluralité de zones d'image HR de la modalité de guidage, et la pluralité de nouvelles zones d'image HR de la modalité de guidage ;
(E) l'aplatissement et la concaténation de la pluralité de nouvelles caractéristiques cibles, et de la pluralité de nouvelles caractéristiques de guidage, pour générer une pluralité de nouvelles caractéristiques concaténées ;
(F) l'estimation d'une pluralité de nouvelles zones d'image HR de la modalité cible en utilisant la transformée de fusion non convolutive apprise sur la pluralité de nouvelles caractéristiques concaténées ; et
(G) l'obtention de la nouvelle image HR de la modalité cible en combinant la pluralité de nouvelles zones d'image HR de la modalité cible.

5. Système (100), comprenant :
une mémoire (102) stockant des instructions ;
une ou plusieurs interfaces de communication (106) ; et
un ou plusieurs processeurs matériels (104) couplés à la mémoire (102) via les une ou plusieurs interfaces de communication (106), dans lequel les un ou plusieurs processeurs matériels (104) sont configurés par les instructions pour :
recevoir une pluralité d'images d'entrée comprenant (i) une pluralité d'images à faible résolution, LR, d'une modalité cible, (ii) une pluralité d'images à haute résolution, HR, d'une modalité de guidage, et (iii) une pluralité d'images HR de la modalité cible ;
prétraiter la pluralité d'images d'entrée, pour générer une pluralité de zones d'image LR de la modalité cible, une pluralité de zones d'image HR de la modalité de guidage, et (i) une pluralité de zones d'image HR de la modalité cible ; et
entraîner un modèle d'entraînement de transformée convolutive profonde, DCTL, pour apprendre une relation intermodale entre la modalité cible et la modalité de guidage, en utilisant (i) la pluralité de zones d'image LR de la modalité cible, (ii) la pluralité de zones d'image HR de la modalité de guidage, et (iii) la pluralité de zones d'image HR de la modalité cible, pour générer un modèle DCTL entraîné, dans lequel l'entraînement de la DCTL comprend :
(a) l'initialisation d'une transformée convolutive profonde à N couches correspondant à la pluralité de zones d'image LR de la modalité cible, d'une transformée convolutive profonde à N couches correspondant à la pluralité de zones d'image HR de la modalité de guidage, et d'une transformée de fusion non convolutive ;
(b) l'initialisation d'une pluralité de caractéristiques cibles correspondant à la pluralité de zones d'image LR de la modalité cible, et d'une pluralité de caractéristiques de guidage correspondant à la pluralité de zones d'image HR de la modalité de guidage avec une valeur nulle ;
(c) l'entraînement d'une transformée convolutive profonde à N couches mise à jour correspondant à la pluralité de zones d'image LR de la modalité cible, d'une transformée convolutive profonde à N couches mise à jour correspondant à la pluralité de zones d'image HR de la modalité de guidage, d'une transformée de fusion non convolutive mise à jour, d'une pluralité mise à jour de caractéristiques cibles, et d'une pluralité mise à jour de caractéristiques de guidage, en utilisant une formulation d'entraînement conjointe pour une super-résolution d'image multimodale (MISR), dans lequel la formulation d'entraînement conjointe comprend la mise à jour de la pluralité de caractéristiques cibles de la transformée convolutive profonde à N couches correspondant à la pluralité de zones d'image LR de la modalité cible, de la pluralité de caractéristiques de guidage de la transformée convolutive profonde à N couches correspondant à la pluralité de zones d'image HR de la modalité de guidage, de la transformée convolutive profonde à N couches correspondant à la pluralité de zones d'image LR de la modalité cible, de la transformée convolutive profonde à N couches correspondant à la pluralité de zones d'image HR de la modalité de guidage, et de la transformée de fusion non convolutive ; et
(d) la mise à jour itérative de la transformée convolutive profonde à N couches correspondant à la pluralité de zones d'image LR de la modalité cible, de la transformée convolutive profonde à N couches correspondant à la pluralité de zones d'image HR de la modalité de guidage, de la transformée de fusion non convolutive, de la pluralité de caractéristiques cibles, et de la pluralité de caractéristiques de guidage, jusqu'à ce qu'une convergence d'une fonction objectif de la formulation d'entraînement conjointe soit obtenue, pour générer le modèle DCTL entraîné, dans lequel la convergence de la fonction objectif est déterminée en identifiant si une différence dans une valeur de la fonction objectif d'une itération actuelle et d'une itération précédente est inférieure à une valeur seuil déterminée empiriquement.

6. Système selon la revendication 5, dans lequel l'entraînement de la transformée convolutive profonde à N couches mise à jour correspondant à la pluralité de zones d'image LR de la modalité cible, de la transformée convolutive profonde à N couches mise à jour correspondant à la pluralité de zones d'image HR de la modalité de guidage, et de la transformée de fusion non convolutive mise à jour, en utilisant la formulation d'entraînement conjointe pour la MISR comprend :
(c.1) la mise à jour de la pluralité de caractéristiques cibles de la transformée convolutive profonde à N couches correspondant à la pluralité de zones d'image LR de la modalité cible, en utilisant
(c.1.1) la transformée convolutive profonde à N couches correspondant à la pluralité de zones d'image LR de la modalité cible,
(c.1.2) la pluralité de zones d'image LR de la modalité cible,
(c.1.3) la régularisation de la pluralité de caractéristiques cibles pour conserver des valeurs positives de la pluralité de caractéristiques cibles, en utilisant une fonction d'activation d'unité linéaire rectifiée (ReLU),
(c.1.4) la transformée de fusion non convolutive,
(c.1.5) la pluralité de caractéristiques de guidage de la transformée convolutive profonde à N couches correspondant à la pluralité de zones d'image HR de la modalité de guidage, et
(c.1.6) la pluralité de zones d'image HR de la modalité cible ;
(c.2) la mise à jour de la pluralité de caractéristiques de guidage de la transformée convolutive profonde à N couches correspondant à la pluralité de zones d'image HR de la modalité de guidage, en utilisant
(c.2.1) la transformée convolutive profonde à N couches correspondant à la pluralité de zones d'image HR de la modalité de guidage,
(c.2.2) la pluralité de zones d'image HR de la modalité de guidage,
(c.2.3) la régularisation de la pluralité de caractéristiques de guidage pour conserver des valeurs positives de la pluralité de caractéristiques de guidage, en utilisant la fonction d'activation ReLU, et
(c.2.4) la transformée de fusion non convolutive,
(c.2.5) la pluralité de caractéristiques cibles de la transformée convolutive profonde à N couches correspondant à la pluralité de zones d'image LR de la modalité cible, et
(c.2.6) la pluralité de zones d'image HR de la modalité cible ;
(c.3) la mise à jour de la transformée convolutive profonde à N couches correspondant à la pluralité de zones d'image LR de la modalité cible, en utilisant la pluralité de zones d'image LR de la modalité cible, la pluralité de caractéristiques cibles mises à jour, et une pluralité de termes de régularisation supplémentaires pour éviter une ou plusieurs solutions triviales et dégénérées et garantir que la transformée convolutive profonde à N couches apprise correspondant à la pluralité de zones d'image LR de la modalité cible est unique, pour générer la transformée convolutive profonde à N couches mise à jour correspondant à la pluralité de zones d'image LR de la modalité cible ;
(c.4) la mise à jour de la transformée convolutive profonde à N couches correspondant à la pluralité de zones d'image HR de la modalité de guidage, en utilisant la pluralité de zones d'image HR de la modalité de guidage, la pluralité de caractéristiques de guidage mises à jour, et la pluralité de termes de régularisation supplémentaires pour éviter les une ou plusieurs solutions triviales et dégénérées et garantir que la transformée convolutive profonde à N couches apprise correspondant à la pluralité de zones d'image HR de la modalité de guidage est unique, pour générer la transformée convolutive profonde à N couches mise à jour correspondant à la pluralité de zones d'image HR de la modalité de guidage ;
(c.5) l'aplatissement de la pluralité de caractéristiques cibles et de la pluralité de caractéristiques de guidage, et la concaténation de la pluralité de caractéristiques cibles et de la pluralité de caractéristiques de guidage, pour générer une pluralité de caractéristiques concaténées ; et
(c.6) la mise à jour de la transformée de fusion non convolutive en utilisant la pluralité de zones d'image HR de la modalité cible et la pluralité de caractéristiques concaténées.

7. Système selon la revendication 5, procédé mis en œuvre par processeur selon la revendication 1, dans lequel la pluralité de caractéristiques cibles comprend une information à basse fréquence de la modalité cible, et la pluralité de caractéristiques de guidage comprend une information à haute fréquence de la modalité cible.

8. Système selon la revendication 5, dans lequel le modèle DCTL entraîné comprenant la transformée convolutive profonde à N couches apprise correspondant à la pluralité de zones d'image LR de la modalité cible, la transformée convolutive profonde à N couches apprise correspondant à la pluralité de zones d'image HR de la modalité de guidage, et la transformée de fusion non convolutive apprise, pendant l'étape d'inférence, effectue la MISR par :
(A) la réception d'une nouvelle image LR de la modalité cible, et d'une nouvelle image HR de la modalité de guidage ;
(B) la division de la nouvelle image LR de la modalité cible, et de la nouvelle image HR de la modalité de guidage, pour générer une pluralité de nouvelles zones d'image LR de la modalité cible, et une pluralité de nouvelles zones d'image HR de la modalité de guidage ;
(C) le calcul d'une pluralité de nouvelles caractéristiques cibles de la transformée convolutive profonde à N couches correspondant à la pluralité de nouvelles zones d'image LR de la modalité cible, en utilisant la transformée convolutive profonde à N couches apprise correspondant à la pluralité de zones d'image LR de la modalité cible, et la pluralité de nouvelles zones d'image LR de la modalité cible ;
(D) le calcul d'une pluralité de nouvelles caractéristiques de guidage de la transformée convolutive profonde à N couches correspondant à la pluralité de nouvelles zones d'image HR de la modalité de guidage, en utilisant la transformée convolutive profonde à N couches apprise correspondant à la pluralité de zones d'image HR de la modalité de guidage, et la pluralité de nouvelles zones d'image HR de la modalité de guidage ;
(E) l'aplatissement et la concaténation de la pluralité de nouvelles caractéristiques cibles, et de la pluralité de nouvelles caractéristiques de guidage, pour générer une pluralité de nouvelles caractéristiques concaténées ;
(F) l'estimation d'une pluralité de nouvelles zones d'image HR de la modalité cible en utilisant la transformée de fusion non convolutive apprise sur la pluralité de nouvelles caractéristiques concaténées ; et
(G) l'obtention de la nouvelle image HR de la modalité cible en combinant la pluralité de nouvelles zones d'image HR de la modalité cible.

9. Un ou plusieurs supports de stockage d'informations lisibles par machine non transitoires comprenant une ou plusieurs instructions qui, lorsqu'elles sont exécutées par un ou plusieurs processeurs matériels, amènent :
la réception d'une pluralité d'images d'entrée comprenant (i) une pluralité d'images à faible résolution, LR, d'une modalité cible, (ii) une pluralité d'images à haute résolution, HR, d'une modalité de guidage, et (iii) une pluralité d'images HR de la modalité cible ;
le prétraitement de la pluralité d'images d'entrée, pour générer une pluralité de zones d'image LR de la modalité cible, une pluralité de zones d'image HR de la modalité de guidage, et une pluralité de zones d'image HR de la modalité cible ; et
l'entraînement d'un modèle d'entraînement de transformée convolutive profonde, DCTL, pour apprendre une relation intermodale entre la modalité cible et la modalité de guidage, en utilisant (i) la pluralité de zones d'image LR de la modalité cible, (ii) la pluralité de zones d'image HR de la modalité de guidage, et (iii) la pluralité de zones d'image HR de la modalité cible, pour générer un modèle DCTL entraîné, dans lequel l'entraînement du modèle DCTL comprend :
(a) l'initialisation d'une transformée convolutive profonde à N couches correspondant à la pluralité de zones d'image LR de la modalité cible, d'une transformée convolutive profonde à N couches correspondant à la pluralité de zones d'image HR de la modalité de guidage, et d'une transformée de fusion non convolutive ;
(b) l'initialisation d'une pluralité de caractéristiques cibles correspondant à la pluralité de zones d'image LR de la modalité cible, et d'une pluralité de caractéristiques de guidage correspondant à la pluralité de zones d'image HR de la modalité de guidage avec une valeur nulle ;
(c) l'entraînement d'une transformée convolutive profonde à N couches mise à jour correspondant à la pluralité de zones d'image LR de la modalité cible, d'une transformée convolutive profonde à N couches mise à jour correspondant à la pluralité de zones d'image HR de la modalité de guidage, d'une transformée de fusion non convolutive mise à jour, d'une pluralité mise à jour de caractéristiques cibles, et d'une pluralité mise à jour de caractéristiques de guidage, en utilisant une formulation d'entraînement conjointe pour une super-résolution d'image multimodale (MISR), dans lequel la formulation d'entraînement conjointe comprend la mise à jour de la pluralité de caractéristiques cibles de la transformée convolutive profonde à N couches correspondant à la pluralité de zones d'image LR de la modalité cible, de la pluralité de caractéristiques de guidage de la transformée convolutive profonde à N couches correspondant à la pluralité de zones d'image HR de la modalité de guidage, de la transformée convolutive profonde à N couches correspondant à la pluralité de zones d'image LR de la modalité cible, de la transformée convolutive profonde à N couches correspondant à la pluralité de zones d'image HR de la modalité de guidage, et de la transformée de fusion non convolutive ; et
(d) la mise à jour itérative de la transformée convolutive profonde à N couches correspondant à la pluralité de zones d'image LR de la modalité cible, de la transformée convolutive profonde à N couches correspondant à la pluralité de zones d'image HR de la modalité de guidage, de la transformée de fusion non convolutive, de la pluralité de caractéristiques cibles, et de la pluralité de caractéristiques de guidage, jusqu'à ce qu'une convergence d'une fonction objectif de la formulation d'entraînement conjointe soit obtenue, pour générer le modèle DCTL entraîné, dans lequel la convergence de la fonction objectif est déterminée en identifiant si une différence dans une valeur de la fonction objectif d'une itération actuelle et d'une itération précédente est inférieure à une valeur seuil déterminée empiriquement.

10. Un ou plusieurs supports de stockage d'informations lisibles par machine non transitoires selon la revendication 9, dans lesquels l'entraînement de la transformée convolutive profonde à N couches mise à jour correspondant à la pluralité de zones d'image LR de la modalité cible, de la transformée convolutive profonde à N couches mise à jour correspondant à la pluralité de zones d'image HR de la modalité de guidage, et de la transformée de fusion non convolutive mise à jour, en utilisant la formulation d'entraînement conjointe pour la MISR comprend :
(c.1) la mise à jour de la pluralité de caractéristiques cibles de la transformée convolutive profonde à N couches correspondant à la pluralité de zones d'image LR de la modalité cible, en utilisant
(c.1.1) la transformée convolutive profonde à N couches correspondant à la pluralité de zones d'image LR de la modalité cible,
(c.1.2) la pluralité de zones d'image LR de la modalité cible,
(c.1.3) la régularisation de la pluralité de caractéristiques cibles pour conserver des valeurs positives de la pluralité de caractéristiques cibles, en utilisant une fonction d'activation d'unité linéaire rectifiée (ReLU),
(c.1.4) la transformée de fusion non convolutive,
(c.1.5) la pluralité de caractéristiques de guidage de la transformée convolutive profonde à N couches correspondant à la pluralité de zones d'image HR de la modalité de guidage, et
(c.1.6) la pluralité de zones d'image HR de la modalité cible ;
(c.2) la mise à jour de la pluralité de caractéristiques de guidage de la transformée convolutive profonde à N couches correspondant à la pluralité de zones d'image HR de la modalité de guidage, en utilisant
(c.2.1) la transformée convolutive profonde à N couches correspondant à la pluralité de zones d'image HR de la modalité de guidage,
(c.2.2) la pluralité de zones d'image HR de la modalité de guidage,
(c.2.3) la régularisation de la pluralité de caractéristiques de guidage pour conserver des valeurs positives de la pluralité de caractéristiques de guidage, en utilisant la fonction d'activation ReLU, et
(c.2.4) la transformée de fusion non convolutive,
(c.2.5) la pluralité de caractéristiques cibles de la transformée convolutive profonde à N couches correspondant à la pluralité de zones d'image LR de la modalité cible, et
(c.2.6) la pluralité de zones d'image HR de la modalité cible ;
(c.3) la mise à jour de la transformée convolutive profonde à N couches correspondant à la pluralité de zones d'image LR de la modalité cible, en utilisant la pluralité de zones d'image LR de la modalité cible, la pluralité de caractéristiques cibles mises à jour, et une pluralité de termes de régularisation supplémentaires pour éviter une ou plusieurs solutions triviales et dégénérées et garantir que la transformée convolutive profonde à N couches apprise correspondant à la pluralité de zones d'image LR de la modalité cible est unique, pour générer la transformée convolutive profonde à N couches mise à jour correspondant à la pluralité de zones d'image LR de la modalité cible ;
(c.4) la mise à jour de la transformée convolutive profonde à N couches correspondant à la pluralité de zones d'image HR de la modalité de guidage, en utilisant la pluralité de zones d'image HR de la modalité de guidage, la pluralité de caractéristiques de guidage mises à jour, et la pluralité de termes de régularisation supplémentaires pour éviter les une ou plusieurs solutions triviales et dégénérées et garantir que la transformée convolutive profonde à N couches apprise correspondant à la pluralité de zones d'image HR de la modalité de guidage est unique, pour générer la transformée convolutive profonde à N couches mise à jour correspondant à la pluralité de zones d'image HR de la modalité de guidage ;
(c.5) l'aplatissement de la pluralité de caractéristiques cibles et de la pluralité de caractéristiques de guidage, et la concaténation de la pluralité de caractéristiques cibles et de la pluralité de caractéristiques de guidage, pour générer une pluralité de caractéristiques concaténées ; et
(c.6) la mise à jour de la transformée de fusion non convolutive en utilisant la pluralité de zones d'image HR de la modalité cible et la pluralité de caractéristiques concaténées.

11. Un ou plusieurs supports de stockage d'informations lisibles par machine non transitoires selon la revendication 9, dans lesquels la pluralité de caractéristiques cibles comprend une information à basse fréquence de la modalité cible, et la pluralité de caractéristiques de guidage comprend une information à haute fréquence de la modalité cible.

12. Un ou plusieurs supports de stockage d'informations lisibles par machine non transitoires selon la revendication 9, dans lesquels le modèle DCTL entraîné comprenant la transformée convolutive profonde à N couches apprise correspondant à la pluralité de zones d'image LR de la modalité cible, la transformée convolutive profonde à N couches apprise correspondant à la pluralité de zones d'image HR de la modalité de guidage, et la transformée de fusion non convolutive apprise, pendant l'étape d'inférence, effectue la MISR par :
(A) la réception d'une nouvelle image LR de la modalité cible, et d'une nouvelle image HR de la modalité de guidage ;
(B) la division de la nouvelle image LR de la modalité cible, et de la nouvelle image HR de la modalité de guidage, pour générer une pluralité de nouvelles zones d'image LR de la modalité cible, et une pluralité de nouvelles zones d'image HR de la modalité de guidage ;
(C) le calcul d'une pluralité de nouvelles caractéristiques cibles de la transformée convolutive profonde à N couches correspondant à la pluralité de nouvelles zones d'image LR de la modalité cible, en utilisant la transformée convolutive profonde à N couches apprise correspondant à la pluralité de zones d'image LR de la modalité cible, et la pluralité de nouvelles zones d'image LR de la modalité cible ;
(D) le calcul d'une pluralité de nouvelles caractéristiques de guidage de la transformée convolutive profonde à N couches correspondant à la pluralité de nouvelles zones d'image HR de la modalité de guidage, en utilisant la transformée convolutive profonde à N couches apprise correspondant à la pluralité de zones d'image HR de la modalité de guidage, et la pluralité de nouvelles zones d'image HR de la modalité de guidage ;
(E) l'aplatissement et la concaténation de la pluralité de nouvelles caractéristiques cibles, et de la pluralité de nouvelles caractéristiques de guidage, pour générer une pluralité de nouvelles caractéristiques concaténées ;
(F) l'estimation d'une pluralité de nouvelles zones d'image HR de la modalité cible en utilisant la transformée de fusion non convolutive apprise sur la pluralité de nouvelles caractéristiques concaténées ; et
(G) l'obtention de la nouvelle image HR de la modalité cible en combinant la pluralité de nouvelles zones d'image HR de la modalité cible.
